# EUROPÄISCHE PATENTSCHRIFT

(11) **EP 4 334 150 B1**
(45) Veröffentlichungstag und Bekanntmachung des Hinweises auf die Patenterteilung: **02.07.2025**
(21) Anmeldenummer: 22727063.4
(22) Anmeldetag: 02.05.2022
(51) Int. Cl.: B60K 1/00, B60K 17/02, B60K 17/06, B60K 17/08, B60K 17/16

(54) **KRAFTFAHRZEUG, INSBESONDERE NUTZFAHRZEUG**
MOTOR VEHICLE, IN PARTICULAR COMMERCIAL VEHICLE
VÉHICULE À MOTEUR, EN PARTICULIER VÉHICULE UTILITAIRE

(30) Priorität: 03.05.2021 DE 102021002327
(43) Veröffentlichungstag der Anmeldung: 13.03.2024
(73) Patentinhaber: Daimler Truck AG, 70771 Leinfelden-Echterdingen (DE)
(72) Erfinder: KAYRAN, Günter, 73760 Ostfildern (DE)
(74) Vertreter: JENSEN & SON
(86) Internationale Anmeldenummer: PCT/EP2022/061688
(87) Internationale Veröffentlichungsnummer: WO 2022/233776

(56) Entgegenhaltungen:
- DE-A1- 102012 220 562
- DE-A1- 102017 006 266
- DE-A1- 102018 130 120
- DE-B3- 102017 111 051
- DE-B3- 102018 008 939

## Beschreibung

Die Erfindung betrifft ein Kraftfahrzeug gemäß dem Oberbegriff von Patentanspruch 1.

Der DE 10 2012 220 562 A1 ist ein Elektroantrieb für ein Fahrzeug als bekannt zu entnehmen, mit einer elektrischen Maschine als Antrieb und mit einem Zweiganggetriebe als Planetengetriebe mit zwei Schaltelementen sowie mit nachgeschaltetem Untersetzungsgetriebe als Abtrieb. Des Weiteren ist es vorgesehen, dass das Planetengetriebe mit Antrieb und Abtrieb derart gekoppelt ist, dass der erste Gang als Direktgang ausgeführt ist. Aufgabe der vorliegenden Erfindung ist es, ein Kraftfahrzeug mit einem besonders vorteilhaften elektrischen Antrieb zu schaffen. Diese Aufgabe wird durch ein Kraftfahrzeug mit den Merkmalen des Patentanspruchs 1 gelöst. Vorteilhafte Ausgestaltungen mit zweckmäßigen Weiterbildungen der Erfindung sind in den übrigen Ansprüchen angegeben.

Aus DE 10 2018 130 120 A1 ist ein mehrstufiges Planetengetriebe für einen elektrischen Antrieb eines Kraftfahrzeuges bekannt, welches eine erste und eine zweite Getriebestufe aufweist.

Die Erfindung betrifft ein Kraftfahrzeug, welches vorzugsweise als Kraftwagen ausgebildet ist. Insbesondere kann das Kraftfahrzeug als Nutzfahrzeug und dabei beispielsweise als Lastkraftwagen (LKW) ausgebildet sein. Das Kraftfahrzeug weist eine lenkbare, erste Achse auf. Unter dem Merkmal, dass die erste Achse lenkbar ist, ist insbesondere Folgendes zu verstehen: die erste Achse weist beispielsweise wenigstens oder genau zwei in Fahrzeugquerrichtung voneinander beabstandet und auf in Fahrzeugquerrichtung gegenüberliegenden Seiten angeordnete, erste Fahrzeugräder auf, welche zumindest mittelbar drehbar mit einem beispielsweise als Rahmen ausgebildeten Fahrgestell verbunden und somit um eine Raddrehachse relativ zu dem Fahrgestell drehbar sind. Insbesondere ist denkbar, dass ein Aufbau wie beispielsweise eine Fahrerkabine an dem Fahrgestell, insbesondere an dem Rahmen, gehalten ist. Die ersten Fahrzeugräder, welche auch einfach als erste Räder bezeichnet werden, können um eine beispielsweise zumindest im Wesentlichen Fahrzeughochrichtung verlaufende Lenkachse relativ zu dem Rahmen (Fahrgestell) verschwenkt oder durchgelenkt werden, wodurch Spurwechsel und Richtungsänderungen Kurvenfahrten des Kraftfahrzeugs bewirkbar sind. Insbesondere sind die ersten Fahrzeugräder mit einer im Innenraum des Kraftfahrzeugs angeordneten und beispielsweise als Lenkrad ausgebildeten Lenkhandhabe verbunden, über welche der Fahrer insbesondere durch Drehen der Lenkhandhabe die ersten Fahrzeugräder lenken kann. Dabei ist insbesondere der Innenraum durch die genannte Fahrerkabine begrenzt.

Das Kraftfahrzeug weist auch eine antreibbare, zweite Achse auf, wobei die Achsen auch als Fahrzeugachsen bezeichnet werden. Die zweite Achse weist wenigstens oder genau zwei zweite Fahrzeugräder auf, welche auch einfach als zweite Räder bezeichnet werden. Die zweiten Fahrzeugräder sind in Fahrzeugquerrichtung voneinander beabstandet und auf den in Fahrzeugquerrichtung aneinander gegenüberliegenden Seiten angeordnet. Die zweiten Fahrzeugräder sind antreibbar, wodurch das Kraftfahrzeug insgesamt angetrieben werden kann. Dabei sind vorzugsweise auch die zweiten Fahrzeugräder um eine zweite Raddrehachse drehbar zumindest mittelbar mit dem Rahmen verbunden. Dabei ist vorzugsweise vorgesehen, dass die Raddrehachsen insbesondere bei einer Geradeausfahrt des Kraftfahrzeugs parallel zueinander und in Fahrzeugquerrichtung verlaufend. Die Fahrzeugräder sind Bodenkontaktelemente des Kraftfahrzeugs, welches in Fahrzeughochrichtung nach unten hin über die Bodenkontaktelemente an einem Boden abstützbar oder abgestützt ist. Werden die zweiten Fahrzeugräder und somit das Kraftfahrzeug angetrieben, während das Kraftfahrzeug in Fahrzeughochrichtung nach unten hin über die Bodenkontaktelemente an dem Boden abgestützt ist, so wird das Kraftfahrzeug entlang des Bodens gefahren, und die Fahrzeugräder rollen an dem Boden ab.

Das Kraftfahrzeug weist einen elektrischen Antrieb zum Antreiben der zweiten Achse auf. Mit anderen Worten kann die zweite Achse mittels des elektrischen Antriebs, insbesondere rein, elektrisch angetrieben werden. Hierzu ist insbesondere zu verstehen, dass die zweiten Fahrzeugräder der zweiten Achse mittels des elektrischen Antriebs, insbesondere rein, elektrisch angetrieben werden können, wodurch das Kraftfahrzeug, insbesondere rein, elektrisch angetrieben werden kann. Somit ist das Kraftfahrzeug vorzugsweise als Hybridfahrzeug oder aber als Elektrofahrzeug ausgebildet. Dabei ist es insbesondere denkbar, dass bezogen auf die erste Achse und die zweite Achse ausschließlich die zweite Achse mittels des elektrischen Antriebs antreibbar ist. Hierunter ist insbesondere zu verstehen, dass bezogen auf die ersten Fahrzeugräder und die zweiten Fahrzeugräder ausschließlich die zweiten Fahrzeugräder der zweiten Achse mittels des elektrischen Antriebs angetrieben werden können.

Das Kraftfahrzeug weist auch eine Traktionsbatterie auf. Die Traktionsbatterie ist ein elektrischer Energiespeicher, in beziehungsweise mittels welchem elektrische Energie zum Speichern oder gespeichert ist. Mittels der Traktionsbatterie ist der elektrische Antrieb mit der in der Traktionsbatterie gespeicherten, elektrischen Energie versorgbar, wodurch das Kraftfahrzeug, insbesondere rein, elektrisch angetrieben werden kann.

Der elektrische Antrieb weist ein Gehäuse und einen Elektromotor auf, welcher einen Stator und einen Rotor aufweist. Der Elektromotor wird auch als erster Elektromotor bezeichnet, sodass der Stator auch als erster Stator und der Rotor auch als erster Rotor bezeichnet wird. Der erste Rotor ist um eine Rotorachse, welche auch als erste Rotorachse bezeichnet wird, relativ zu dem Stator und relativ zu dem Gehäuse drehbar. Insbesondere kann der Rotor mittels des Stators angetrieben werden. Beispielsweise sind der Stator und der Rotor jeweils zumindest teilweise in dem Gehäuse angeordnet. Ferner kann vorgesehen sein, dass der Elektromotor über seinen Rotordrehmoment zum, insbesondere rein, elektrischen Antreiben der zweiten Achse und somit des Kraftfahrzeugs bereitstellen kann. Um den Rotor anzutreiben und um somit die zweite Achse mittels des Elektromotors anzutreiben, wird der Elektromotor mit der in der Traktionsbatterie gespeicherten, elektrischen Energie versorgt.

Der elektrische Antrieb weist außerdem einen koaxial zu der Rotorachse angeordneten ersten Planetenradsatz auf, welcher ein erstes Element, ein zweites Element und ein drittes Element aufweist. Eines der Elemente des ersten Planetenradsatzes ist ein erstes Sonnenrad, welches auch einfach als erste Sonne bezeichnet wird. Eines der Elemente des ersten Planetenradsatzes ist ein erster Planetenträger, welcher auch als erster Steg bezeichnet wird. Eines der Elemente des ersten Planetenradsatzes ist ein erstes Hohlrad des ersten Planetenradsatzes. Zumindest eines der Elemente des ersten Planetenradsatzes ist insbesondere dann, wenn das zumindest eine Element des ersten Planetenradsatzes nicht drehfest mit dem Gehäuse verbunden ist, um eine erste Radsatzdrehachse relativ zu dem Gehäuse drehbar, wobei die erste Radsatzdrehachse auch als Hauptrotationsachse bezeichnet ist, als Hauptrotationsachse ausgebildet ist oder mit einer Hauptrotationsachse zusammenfällt. Im Rahmen der vorliegenden Offenbarung sind unter koaxial zueinander angeordneten, drehbaren Bauteilen solche Bauteile oder Bauelemente zu verstehen, die insbesondere relativ zu dem Gehäuse um eine jeweilige Bauelementdrehachse wie beispielsweise die erste Radsatzdrehachse drehbar sind, wobei die Bauelementdrehachsen koaxial zueinander verlaufen beziehungsweise zusammenfallen. Somit ist unter dem Merkmal, dass der erste Planetenradsatz koaxial zu der Rotorachse angeordnet ist oder verläuft, zu verstehen, dass die erste Radsatzdrehachse und somit die Hauptrotationsachse mit der Rotorachse zusammenfällt. Die Rotorachse wird auch als erste Rotordrehachse bezeichnet.

Ferner ist vorzugsweise unter dem Merkmal, dass der erste Planetenradsatz koaxial zu der Rotorachse angeordnet ist, zu verstehen, dass die koaxial zueinander angeordneten Elemente des ersten Planetenradsatzes koaxial zu dem Rotor und somit koaxial zu dem Elektromotor angeordnet sind.

Der elektrische Antrieb weist außerdem einen zweiten Planetenradsatz auf, welcher koaxial zu der Rotorachse und somit auch koaxial zu dem ersten Planetenradsatz angeordnet ist. Der zweite Planetenradsatz weist ein viertes Element, ein fünftes Element und ein sechstes Element auf. Eines der Elemente des zweiten Planetenradsatzes ist ein zweites Sonnenrad, welches auch als zweite Sonne bezeichnet wird. Eines der Elemente des zweiten Planetenradsatzes ist ein zweiter Planetenträger, welcher auch als zweiter Steg bezeichnet wird. Eines der Elemente des zweiten Planetenradsatzes ist ein zweites Hohlrad. Zumindest eines der Elemente des zweiten Planetenradsatzes ist um eine zweite Radsatzdrehachse relativ zu dem Gehäuse drehbar, zumindest dann, wenn das zumindest eine Element des zweiten Planetenradsatzes nicht drehfest mit dem Gehäuse verbunden ist. Da die Planetenradsätze koaxial zueinander angeordnet sind, fallen die Radsatzdrehachsen zusammen, und die Radsatzdrehachsen fallen mit der Hauptrotationsachse zusammen beziehungsweise die zweite Radsatzdrehachse ist die Hauptrotationsachse, und auch die erste Rotorachse fällt mit der zweiten Radsatzdrehachse zusammen. Außerdem sind die Elemente des zweiten Radsatzes koaxial zueinander angeordnet.

Der Elektromotor wird auch als erster Elektromotor bezeichnet. Wenn im Folgenden die Rede von dem Elektromotor, dem Stator, dem Rotor und der Rotorachse ist, so ist darunter, falls nichts anderes angegeben ist, der erste Elektromotor, der erste Rotor, der erste Stator und die erste Rotorachse zu verstehen.

Bei dem Kraftfahrzeug sind in axialer Richtung des Rotors, das heißt entlang der ersten Rotorachse betrachtet oder gesehen, der erste Elektromotor, der erste Planetenradsatz und der zweite Planetenradsatz in der folgenden Reihenfolge nacheinander, aufeinanderfolgend angeordnet: der Elektromotor - der erste Planetenradsatz - der zweite Planetenradsatz. Mit anderen Worten ist in axialer Richtung des Rotors der erste Planetenradsatz nach dem Elektromotor und der zweite Planetenradsatz nach dem ersten Planetenradsatz angeordnet. Wieder mit anderen Worten ausgedrückt folgt in axialer Richtung des Rotors, das heißt entlang der ersten Rotorachse betrachtet der erste Planetenradsatz auf den Rotor und der zweite Planetenradsatz auf den ersten Planetenradsatz, jeweils zumindest teilweise, insbesondere zumindest überwiegend und somit zumindest zu mehr als zur Hälfte oder aber vorzugsweise vollständig. Da die Rotordrehachse mit der Hauptrotationsachse zusammenfällt, entspricht die axiale Richtung des Rotors und somit des Elektromotors der axialen Richtung des jeweiligen Planetenradsatzes.

Um nun eine besonders vorteilhafte und insbesondere kompakte Bauweise des elektrischen Antriebs realisieren sowie eine Komplexität des elektrischen Antriebs vorteilhaft geringhalten zu können, ist es erfindungsgemäß vorgesehen, dass in Fahrzeuglängsrichtung, das heißt in Längsrichtung des Kraftfahrzeugs betrachtet die erste Achse, die Traktionsbatterie, die zweite Achse und der elektrische Antrieb in der folgenden Reihenfolge nacheinander beziehungsweise aufeinanderfolgend angeordnet sind: die erste Achse - die Traktionsbatterie - die zweite Achse - der elektrische Antrieb. Dabei fällt die Fahrzeuglängsrichtung des Kraftfahrzeugs mit dessen Vorwärtsfahrtrichtung zusammen, wenn das Kraftfahrzeug geradeaus gefahren wird, mithin keine Kurve fährt. Dabei ist es insbesondere vorgesehen, dass die Fahrzeuglängsrichtung senkrecht zur zuvor genannten Fahrzeugquerrichtung verläuft, sodass insbesondere bei einer Geradeausfahrt des Kraftfahrzeugs die jeweilige Raddrehachse senkrecht zur Fahrzeuglängsrichtung verläuft.

Des Weiteren ist es erfindungsgemäß vorgesehen, dass das Gehäuse zumindest im Wesentlichen starr an den Rahmen des Kraftfahrzeugs angebunden ist. Hierunter ist zu verstehen, dass das Gehäuse unter Umgehung der beziehungsweise aller Fahrzeugachsen des Kraftfahrzeugs an den Rahmen angebunden, das heißt an dem Rahmen gehalten ist. Wieder mit anderen Worten ausgedrückt ist das Gehäuse nicht etwa achsfest, das heißt nicht unter Vermittlung einer der Achsen an dem Rahmen gehalten, sondern das Gehäuse ist rahmenfest. Somit kann das jeweilige Fahrzeugrad der jeweiligen Achse relativ zu dem Rahmen insbesondere in Fahrzeughochrichtung erfolgende Ein- und Ausfederbewegungen durchführen, ohne dass hierbei sich das Gehäuse mit der jeweiligen Achse beziehungsweise mit dem jeweiligen Fahrzeugrad relativ zu dem Rahmen mitbewegt. Somit führt das jeweilige Fahrzeugrad die Ein- und Ausfederbewegungen auch relativ zu dem Gehäuse aus. Insbesondere ist das Gehäuse zumindest im Wesentlichen direkt an den Rahmen angebunden. Es ist denkbar, dass das Gehäuse elastisch und somit schwingungsgedämpft, das heißt über wenigstens ein beispielsweise aus Gummi gebildetes, elastisch verformbares Lagerelement an dem Rahmen gehalten ist, jedoch ist das Gehäuse nicht über eine der Achsen an dem Rahmen gehalten, sodass beispielsweise ein Kraftpfad, über welchen Kräfte zwischen dem Gehäuse und dem Rahmen übertragbar sind, von dem Gehäuse zu dem Rahmen beziehungsweise umgekehrt verläuft und dabei über keine Fahrzeugachse des Kraftfahrzeugs verläuft.

Des Weiteren ist es erfindungsgemäß vorgesehen, dass der elektrische Antrieb einen Winkeltrieb aufweist, welcher insbesondere von dem Rotor antreibbar ist, sodass über den Winkeltrieb die zweiten Fahrzeugräder der antreibbaren beziehungsweise angetriebenen zweiten Achse von dem Rotor und somit von dem Elektromotor antreibbar sind. Unter dem Winkeltrieb ist insbesondere zu verstehen, dass mittels des Winkeltriebs eine Drehmomentenumlenkung von beispielsweise wenigstens 70 Grad, insbesondere wenigstens 80 Grad und ganz insbesondere 90 Grad, bewirkbar ist, hierunter ist insbesondere folgendes zu verstehen: Über den Rotor kann der Elektromotor Drehmomente zum Antreiben der zweiten Fahrzeugräder bereitstellen, wobei das jeweilige, von dem Elektromotor über den Rotor bereitgestellte und zum Antreiben der zweiten Achse beziehungsweise der zweiten Fahrzeugräder vorgesehene Drehmoment auch als Antriebsmoment oder Antriebsdrehmoment bezeichnet wird. Das jeweilige Antriebsmoment ist oder wird über einen Drehmomentenübertragungspfad von dem Rotor auf die zweite Achse und somit auf das jeweilige, zweite Fahrzeugrad der zweiten Achse übertragbar beziehungsweise übertragen. Dabei ist der Winkeltrieb in dem von dem Rotor zu der beziehungsweise auf die zweite Achse verlaufenden Drehmomentübertragungspfad angeordnet. Mittels des Winkeltriebs wird das jeweilige, entlang des Drehmomentübertragungspfads verlaufende Antriebsmoment umgelenkt, und zwar, wie zuvor beschrieben, vorzugsweise um wenigstens 70 Grad, insbesondere wenigstens 80 Grad und ganz insbesondere wenigstens oder genau 90 Grad. Hierunter ist insbesondere zu verstehen, dass ein erster Teilbereich des Drehmomentübertragungspfads und ein zweiter Teilbereich des Drehmomentenübertragungspfads schräg, insbesondere senkrecht, zueinander verlaufen und dabei einen Winkel einschließen, welcher vorzugsweise wenigstens 70 Grad, insbesondere wenigstens 80 Grad und ganz vorzugsweise wenigstens oder genau 90 Grad ist, wobei insbesondere der Winkel der kleinste, von den Teilbereichen eingeschlossene Winkel ist. Dabei sind die Teilbereiche über den Winkelantrieb, insbesondere permanent, drehmomentübertragend miteinander gekoppelt oder koppelbar, sodass beispielsweise ein Eingang des Winkeltriebs in dem ersten Teilbereich und ein Ausgang des Winkeltriebs in dem zweiten Teilbereich angeordnet ist, insbesondere derart, dass der Eingang und der Ausgang, insbesondere permanent, drehmomentübertragend miteinander koppelbar oder gekoppelt sind. Beispielsweise kann das jeweilige Antriebsmoment über den Eingang des Winkeltriebs in den Winkeltrieb eingeleitet werden, wodurch der Winkeltrieb von dem Rotor antreibbar ist. Über seinen Ausgang kann der Winkeltrieb das in den Winkeltrieb eingeleitete Drehmoment oder ein aus dem Winkeltrieb eingeleiteten Drehmoment resultierendes, weiteres Drehmoment bereitstellen und an die zweite Achse übertragen. Der Winkeltrieb ermöglicht es, eine besonders geringe Länge des elektrischen Antriebs in axialer Richtung des Rotors und somit des elektrischen Antriebs insgesamt realisieren zu können.

Des Weiteren ist erfindungsgemäß eine Gelenkwelle vorgesehen, welche beispielsweise in dem zweiten Teilbereich des Drehmomentübertragungspfads angeordnet ist. Somit ist es vorzugsweise vorgesehen, dass die Gelenkwelle über den Winkeltrieb von dem Rotor und somit von dem Elektromotor antreibbar ist, sodass die zweite Achse über die Gelenkwelle von dem Winkeltrieb, insbesondere von dem Ausgang des Winkeltriebs, antreibbar ist. Eines der Elemente des zweiten Planetenradsatzes ist drehfest mit einem Eingangszahnrad des Winkeltriebs gekoppelt oder koppelbar. Das Eingangszahnrad wird auch als Eingangsrad bezeichnet und ist an oder in dem Eingang des Winkeltriebs angeordnet. Mit anderen Worten ist das Eingangszahnrad Bestandteil des Eingangs des Winkeltriebs, sodass beispielsweise das jeweilige Antriebsmoment über das Eingangszahnrad in den Winkeltrieb einleitbar ist. Somit ist insbesondere das Eingangszahnrad in dem ersten Teilbereich angeordnet. Ein Ausgangszahnrad des Winkeltriebs, dessen Ausgangszahnrad auch als Ausgangsrad bezeichnet wird, ist mit einer Eingangsseite der Gelenkwelle, insbesondere drehmomentübertragen, gekoppelt oder koppelbar. Das Ausgangszahnrad ist somit in oder an dem Ausgang des Winkeltriebs angeordnet. Mit anderen Worten ist das Ausgangszahnrad des Winkeltriebs ein Bestandteil des Ausgangs des Winkeltriebs, sodass der Winkeltrieb über das Ausgangszahnrad das Antriebsmoment beziehungsweise das jeweilige, aus dem Antriebsmoment resultierende Drehmoment bereitstellen kann, und über das Eingangszahnrad kann das jeweilige Antriebsmoment im Winkeltrieb eingeleitet werden. Somit ist beispielsweise das Ausgangszahnrad in dem zweiten Teilbereich angeordnet. Die Eingangsseite der Gelenkwelle ist vorzugsweise in dem zweiten Teilbereich angeordnet, sodass das von dem Winkeltrieb bereitgestellte Antriebsmoment beziehungsweise weitere Drehmoment über die Eingangsseite der Gelenkwelle auf die Gelenkwelle übertragen werden kann, mithin in die Gelenkwelle eingeleitet werden kann.

Beispielsweise ist es vorgesehen, dass das Ausgangszahnrad mit dem Eingangszahnrad, insbesondere direkt, kämmt. Das Ausgangszahnrad ist von dem Eingangszahnrad antreibbar, sodass die Gelenkwelle über ihre Eingangsseite von dem Ausgangszahnrad antreibbar ist. Somit ist die Gelenkwelle über das Ausgangszahnrad von dem Eingangszahnrad antreibbar.

Eine Ausgangsseite der Gelenkwelle ist mit einem Achsgetriebe der zweiten Achse gekoppelt oder koppelbar. Die Ausgangsseite der Gelenkwelle ist vorzugsweise dem zweiten Teilbereich des Drehmomentenübertragungspfads angeordnet, wobei die Ausgangsseite von der Eingangsseite antreibbar ist. Somit ist die Ausgangsseite über die Eingangsseite von dem Ausgangszahnrad antreibbar, und das Achsgetriebe ist über die Ausgangsseite von der Eingangsseite antreibbar, sodass das Achsgetriebe über die Gelenkwelle von dem Ausgangszahnrad, mithin von dem Winkeltrieb antreibbar ist. Das Achsgetriebe ist vorzugsweise ein einfach auch als Differenzial bezeichnetes Differenzialgetriebe, über welches die zweiten Fahrzeugräder von der Gelenkwelle, insbesondere von der Ausgangsseite, antreibbar sind, insbesondere auch während einer Kurvenfahrt. Wie aus dem allgemeinen Stand der Technik bereits hinlänglich bekannt ist, ist das Achsgetriebe vorzugsweise dazu ausgebildet, bei einer Kurvenfahrt des Kraftfahrzeugs unterschiedliche Drehzahlen der zweiten Fahrzeugräder der zweiten Achse zuzulassen, insbesondere während die zweiten Fahrzeugräder über das Achsgetriebe drehmomentübertragend mit der Gelenkwelle gekoppelt sind und insbesondere von der Gelenkwelle über das Achsgetriebe angetrieben werden, um dadurch das Kraftfahrzeug anzutreiben.

Im Rahmen der vorliegenden Offenbarung ist unter dem Merkmal, dass zwei Bauelemente drehfest miteinander verbunden sind, zu verstehen, dass die Bauelemente koaxial zueinander angeordnet und derart miteinander verbunden sind, dass sie mit gleicher Winkelgeschwindigkeit gemeinsam, insbesondere um eine den Bauelementen gemeinsame Bauteildrehachse, drehen, insbesondere relativ zu dem zuvor genannten Gehäuse. Unter dem Merkmal, dass die zwei Bauelemente permanent drehfest miteinander verbunden sind, ist zu verstehen, dass nicht etwa ein Umschaltelement vorgesehen ist, welches zwischen einem die Bauelemente drehfest miteinander verbindenden Koppelzustand und einen die Bauelemente für eine insbesondere um die Bauteildrehachse erfolgende Drehung relativ zueinander freigebendem Entkoppelzustand umschaltbar ist, sondern die Bauelement sind stets beziehungsweise permanent (immer) drehfest miteinander verbunden. Unter dem Merkmal, dass die beziehungsweise zwei Bauelemente drehfest miteinander verbindbar sind, ist insbesondere zu verstehen, dass den Bauelementen ein Umschaltelement zugeordnet ist, welches zwischen wenigstens einem Koppelzustand und wenigstens einem Entkoppelzustand umschaltbar ist. In dem Koppelzustand sind die Bauelemente mittels des Umschaltelements drehfest miteinander verbunden. In dem Entkoppelzustand sind die Bauelemente voneinander entkoppelt, sodass in dem Entkoppelzustand die Bauelemente relativ zueinander insbesondere um die Bauteildrehachse drehbar sind.

Unter dem Merkmal, dass zwei Bauelemente drehmomentübertragend miteinander verbunden sind, ist zu verstehen, dass ein Drehmoment zwischen den Bauelementen übertragen werden kann, das heißt, dass ein Drehmoment von einem der Bauelemente auf das andere Bauelement übertragen werden kann, sodass beispielsweise das eine Bauelement das andere Bauelemente antreiben kann. Sind die beziehungsweise zwei Bauelemente drehmomentübertragend miteinander gekoppelt oder verbunden, so müssen die Bauelemente nicht notwendigerweise koaxial zueinander angeordnet sein. Drehfest miteinander verbundene Bauelemente sind auch drehmomentübertragend miteinander gekoppelt, wobei umgekehrtes nicht notwendigerweise gilt. Unter dem Merkmal, dass zwei Bauelemente permanent drehmomentübertragend miteinander verbunden oder gekoppelt sind, ist zu verstehen, dass nicht etwa ein Umschaltelement vorgesehen ist, welches zwischen einem die Bauelemente drehmomentübertragend miteinander verbindenden oder koppelnden Koppelzustand und einem Entkoppelzustand umschaltbar ist, in welchem keine Drehmomente über das Koppelelement zwischen den Bauelementen übertragen werden können, sondern die Bauelemente sind stets beziehungsweise permanent drehmomentübertragend miteinander verbunden oder gekoppelt. Somit ist unter dem Merkmal, dass die beziehungsweise zwei Bauelemente drehmomentübertragend miteinander verbindbar oder koppelbar sind, insbesondere zu verstehen, dass den Bauelementen ein Umschaltelement zugeordnet ist, welches zwischen wenigstens einem Koppelzustand und wenigstens einem Entkoppelzustand umschaltbar ist. In dem Koppelzustand sind die Bauelement mittels des Umschaltelements drehmomentübertragend miteinander verbunden, sodass zwischen den Bauelement über das Umschaltelement drehmomentübertragen werden können. Somit kann eines der Bauelemente über das Umschaltelement das andere Bauelement antreiben. In dem Entkoppelzustand sind die Bauelement voneinander entkoppelt, sodass in dem Entkoppelzustand keine Drehmomente zwischen den Bauelementen übertragen werden können.

Diesbezüglich und in Hinblick auf den Winkeltrieb kann somit beispielsweise vorgesehen sein, dass das Ausgangszahnrad und das Eingangszahnrad drehfest miteinander koppelbar sind. Insbesondere ist es denkbar, dass das Eingangszahnrad und das Ausgangszahnrad, insbesondere permanent, drehmomentübertragend miteinander gekoppelt sind, insbesondere derart, dass das Eingangszahnrad, insbesondere direkt, mit dem Ausgangszahnrad kämmt. Da jedoch der Winkeltrieb die zuvor beschriebene Drehmomentenumlenkung bewirkt, insbesondere derart, dass beispielsweise das Eingangszahnrad in dem ersten Teilbereich und das Ausgangszahnrad in dem zweiten Teilbereich angeordnet ist, welcher schräg oder senkrecht zu dem ersten Teilbereich verläuft, sind das Ausgangszahnrad und das Eingangszahnrad nicht koaxial zueinander angeordnet. Beispielsweise ist das Eingangszahnrad um eine Eingangszahnraddrehachse relativ zu dem Gehäuse drehbar, und das Ausgangszahnrad ist um eine Ausgangszahnraddrehachse relativ zu dem Gehäuse drehbar, wobei die Ausgangszahnraddrehachse schräg oder senkrecht zu der Eingangszahnraddrehachse verläuft, insbesondere während das Eingangszahnrad und das Ausgangszahnrad, insbesondere permanent, drehmomentübertragend miteinander gekoppelt sind, insbesondere direkt miteinander kämmen. Dabei ist es denkbar, dass die Eingangszahnraddrehachse in dem ersten Teilbereich verläuft beziehungsweise mit dem ersten Teilbereich des Drehmomentübertragungspfads zusammenfällt, wobei beispielsweise die Ausgangszahnraddrehachse in dem zweiten Teilbereich verläuft beziehungsweise mit dem zweiten Teilbereich zusammenfällt. Die Verwendung des Winkeltriebs kann der elektrische Antrieb quer eingebaut, das heißt quer verbaut werden, sodass die axiale Richtung des Rotors, das heißt die erste Rotorachse beziehungsweise die Hauptrotationsachse schräg oder vorzugsweise senkrecht zur Fahrzeuglängsrichtung verläuft. Dabei ist es insbesondere denkbar, dass der erste Teilbereich mit der Hauptrotationsachse zusammenfällt und somit schräg oder senkrecht zur Fahrzeugquerrichtung verläuft, wobei es insbesondere denkbar ist, dass der zweite Teilbereich in Fahrzeuglängsrichtung verläuft, mithin mit der Fahrzeuglängsrichtung zusammenfällt. Somit kann über den Winkeltrieb und die Gelenkwelle das jeweilige Antriebsmoment besonders vorteilhaft zu der zweiten Achse übertragen werden, und der elektrische Antrieb kann, insbesondere in Fahrzeuglängsrichtung hinter der zweiten Achse, quer eingebaut werden. Da außerdem das Gehäuse und somit der elektrische Antrieb nicht etwa achsfest, sondern rahmenfest sind, ist das Gehäuse beziehungsweise der elektrische Antrieb keine ungefederte Masse, sondern eine gefederte Masse, sodass ein übermäßiger Verschleiß vermieden werden kann. Ein weiterer Vorteil der Anordnung des elektrischen Antriebs in Fahrzeuglängsrichtung hinter der zweiten Achse ist, dass die Traktionsbatterie in Fahrzeuglängsrichtung zwischen der ersten Achse und der zweiten Achse angeordnet werden kann. Dadurch können eine vorteilhafte Größe und eine besonders hohe Speicherkapazität der Traktionsbatterie dargestellt werden.

Beispielsweise ist das Eingangszahnrad des Winkeltriebs ein Tellerrad, wobei das Ausgangszahnrad des Winkeltriebs ein Kegelrad sein kann. Alternativ oder zusätzlich ist es denkbar, dass mit der Gelenkwelle, insbesondere mit der Ausgangsseite der Gelenkwelle, ein, insbesondere zweites, Kegelrad drehmomentübertragend, insbesondere drehfest, verbunden oder verbindbar ist. Ferner ist es denkbar, dass das Achsgetriebe ein, insbesondere zweites, Tellerrad aufweist, welches drehmomentübertragend mit dem zweiten Kegelrad verbunden oder gekoppelt ist, insbesondere derart, dass das zweite Kegelrad mit dem zweiten Tellerrad, insbesondere direkt, kämmt. Hierdurch kann eine besonders vorteilhafte, kompakte und verschleißarme Drehmomentübertragung dargestellt werden.

Durch Verschalten der zwei Planetenradsätze kann die in axialer Richtung des Rotors und somit des elektrischen Antriebs insgesamt verlaufende Länge des elektrischen Antriebs besonders kurzgehalten werden, sodass eine besonders kompakte Bauweise des elektrischen Antriebs darstellbar ist. Somit kann der elektrische Antrieb besonders vorteilhaft quer verbaut oder eingebaut werden. Außerdem kann hierdurch der elektrische Antrieb hinter der zweiten Achse angeordnet werden, wodurch im Vergleich zu einer Anordnung des elektrischen Antriebs in Fahrzeuglängsrichtung zwischen den Achsen mehr Bauraum für übrige Komponenten zwischen den Achsen geschaffen werden kann. Außerdem können zumindest die folgenden Vorteile realisiert werden:
- modulare Bauweise des elektrischen Antriebs, wodurch unterschiedliche Fahrzeugtypen, Tonnagen und/oder Achsen elektrifiziert werden können, insbesondere derart, dass das Kraftfahrzeug als reines Elektrofahrzeug oder aber als Hybridfahrzeug ausgestaltet werden kann
- bauraumgünstig durch Querverbau des elektrischen Antriebs und Nutzung des elektrischen Antriebs als Heckmotor
- die Komplexität des elektrischen Antriebs, besonders geringgehalten werden, größere Variabilität bei geringen Kosten in der Entwicklung, Herstellung und Wartung beziehungsweise Reparatur

In vorteilhafter Ausgestaltung der Erfindung ist das Ausgangszahnrad des Winkeltriebs, insbesondere permanent, mit einem ersten Zahnrad einer Stirnradstufe drehfest gekoppelt, das heißt verbunden. Dadurch kann ein besonders effizienter Betrieb realisiert werden, und es kann eine besonders kompakte Bauweise des elektrischen Antriebs dargestellt werden. Ein besonders großer Vorteil dieser Ausführungsform ist, dass eine besonders vorteilhafte Gesamtübersetzung des elektrischen Antriebs dargestellte werden kann. Außerdem kann die auch als Hauptantriebsachse bezeichnete, antreibbare, zweite Achse besonders gut positioniert werden, insbesondere relativ koaxial zu der Hauptrotationsachse angeordneten oder anzuordnenden Komponenten. Insbesondere kann eine vorteilhafte Positionierbarkeit der Hauptrotationsachse in ihrem eingebauten Zustand im Kraftfahrzeug realisiert werden, insbesondere derart, dass die Hauptrotationsachse in Fahrzeughochrichtung möglichst hoch und in Fahrzeugquerrichtung möglichst in der Mitte zwischen den in Fahrzeugquerrichtung einander gegenüberliegenden Seiten angeordnet werden kann.

Dabei hat es sich als besonders vorteilhaft gezeigt, wenn ein zweites Zahnrad der Stirnradstufe, insbesondere permanent, drehfest mit der Eingangsseite der Gelenkquelle gekoppelt, das heißt verbunden ist. Dabei ist es insbesondere vorgesehen, dass das erste Zahnrad, insbesondere direkt, mit dem zweiten Zahnrad kämmt. Hierdurch kann eine besonders kompakte Bauweise und ein besonders effizienter Betrieb dargestellt werden.

Eine weitere Ausführungsform zeichnet sich dadurch aus, dass der elektrische Antrieb ein erstes Schaltelement aufweist, mittels welchem das dritte Element drehfest mit dem Rotor koppelbar, das heißt verbindbar ist. Das erste Schaltelement kann somit zwischen wenigstens einem ersten Koppelzustand und wenigstens einem ersten Entkoppelzustand umgeschaltet werden. Beispielsweise kann das erste Schaltelement, insbesondere translatorisch und/oder relativ zu dem Gehäuse und/oder in axialer Richtung des Rotors, das heißt entlang der Rotorachse oder entlang einer parallel zu der Rotorachse verlaufenden Bewegungsrichtung, zwischen wenigstens einer ersten Koppelstellung und wenigstens einer ersten Entkoppelstellung bewegt werden. Dabei bewirkt die erste Koppelstellung den ersten Koppelzustand und die erste Entkoppelstellung bewirkt den ersten Entkoppelzustand. In dem ersten Koppelzustand, das heißt in der ersten Koppelstellung, ist das dritte Element mittels des ersten Schaltelements drehfest mit dem Rotor gekoppelt, das heißt verbunden. In dem ersten Entkoppelzustand, das heißt in der ersten Entkoppelstellung jedoch gibt das erste Schaltelement das dritte Element für eine um die Hauptrotationsachse relativ zu dem Rotor erfolgende Drehung frei.

Des Weiteren ist ein zweites Schaltelement vorgesehen, mittels welchem das dritte Element drehfest mit dem Gehäuse koppelbar, das heißt verbindbar ist. Somit ist das zweite Schaltelement zwischen wenigstens einem zweiten Koppelzustand und wenigstens einem zweiten Entkoppelzustand umschaltbar. Insbesondere kann das zweite Schaltelement, insbesondere translatorisch und/oder relativ zu dem Gehäuse und/oder in axialer Richtung des Rotors, das heißt entlang der Rotorachse beziehungsweise entlang der zuvor beschriebenen Bewegungsrichtung, zwischen wenigstens einer zweiten Koppelstellung und wenigstens einer zweiten Entkoppelstellung bewegt werden. Die zweite Koppelstellung bewirkt den zweiten Koppelzustand, und die zweite Entkoppelstellung bewirkt den zweiten Entkoppelzustand. In dem zweiten Koppelzustand ist das dritte Element mittels des zweiten Schaltelements drehfest mit dem Gehäuse gekoppelt, das heißt verbunden. In dem zweiten Entkoppelzustand gibt das zweite Schaltelement das dritte Element für eine um die Hauptrotationsachse relativ zu dem Gehäuse erfolgende Drehung frei.

Des Weiteren ist vorzugsweise ein drittes Schaltelement vorgesehen, mittels welchem das erste Element drehfest mit dem Rotor koppelbar, das heißt verbindbar ist. Das dritte Schaltelement ist beispielsweise zwischen wenigstens einem dritten Koppelzustand und wenigstens einem dritten Entkoppelzustand umschaltbar. Insbesondere kann beispielsweise das dritte Schaltelement, insbesondere translatorisch und/oder relativ zu dem Gehäuse und/oder in axialer Richtung des Rotors, mithin entlang der Rotorachse, zwischen wenigstens einer dritten, den dritten Koppelzustand bewirkenden Koppelstellung und wenigstens einer dritten, den dritten Entkoppelzustand bewirkenden Entkoppelstellung bewegt werden. In dem dritten Koppelzustand ist mittels des dritten Schaltelements das erste Element drehfest mit dem Rotor gekoppelt. In dem dritten Entkoppelzustand gibt das dritte Schaltelement das erste Element für eine um die Hauptrotationsachse relativ zu dem Rotor erfolgende Drehung frei.

Außerdem ist vorzugsweise ein viertes Schaltelement vorgesehen, mittels welchem das erste Element drehfest mit dem Gehäuse koppelbar ist. Dabei ist beispielsweise das vierte Schaltelement zwischen einem vierten Koppelzustand und einem vierten Entkoppelzustand umschaltbar. Insbesondere kann das vierte Schaltelement, beispielsweise translatorisch und/oder relativ zu dem Gehäuse und/oder in axialer Richtung des Rotors, zwischen wenigstens einer, den vierten Koppelzustand bewirkenden, vierten Koppelstellung und wenigstens einer, den vierten Entkoppelzustand bewirkenden, vierten Entkoppelstellung bewegt werden. In dem vierten Koppelzustand ist mittels des vierten Schaltelement das erste Element drehfest mit dem Gehäuse gekoppelt. In dem vierten Entkoppelzustand gibt das vierte Schaltelement das erste Element für eine um die Hauptrotationsachse relativ zu dem Gehäuse erfolgende Drehung frei. Dabei ist das vierte Schaltelement auf ein in axialer Richtung des Rotors von dem ersten Planetenradsatz abgewandten Seite des Elektromotors angeordnet.

Des Weiteren ist vorzugsweise ein fünftes Schaltelement vorgesehen, mittels welchem das zweite Element drehfest mit dem vierten Element koppelbar, das heißt verbindbar ist. Somit ist beispielsweise das fünfte Schaltelement zwischen einem fünften Koppelzustand und einem fünften Entkoppelzustand umschaltbar. Beispielsweise ist das fünfte Schaltelement, insbesondere relativ zu dem Gehäuse und/oder translatorisch und/oder in axialer Richtung des Rotors, zwischen wenigstens einer, den fünften Koppelzustand bewirkenden, fünften Koppelstellung und wenigstens einer, den fünften Entkoppelzustand bewirkenden, fünften Entkoppelstellung bewegbar. In dem fünften Koppelzustand ist mittels des fünften Schaltelements das zweite Element drehfest mit dem vierten Element gekoppelt, das heißt verbunden. In dem fünften Entkoppelzustand gibt das fünfte Schaltelement das zweite Element für eine insbesondere um die Hauptrotationsachse relativ zu dem vierten Element folgende Drehung frei.

Das fünfte Element ist drehfest mit dem Eingangszahnrad des Winkeltriebs gekoppelt oder koppelbar. Durch Verwendung der Schaltelemente kann auf besonders bauraumgünstige Weise eine besonders vorteilhaften Fahrbarkeit und somit ein besonders effizienter Betrieb realisiert werden. Insbesondere können somit auf besonders bauraumgünstige Weise mehrere, insbesondere schaltbare, Gänge des elektrischen Antriebs realisiert werden, wobei sich die Gänge beispielsweise in ihren jeweiligen Übersetzungen voneinander unterscheiden.

Bei einer weiteren, Besondres vorteilhaften Ausführungsform der Erfindung ist das fünfte Schaltelement dazu ausgebildet, das zweite Element drehfest mit dem vierten Element und drehfest mit dem sechsten Element zu koppeln. Beispielsweise ist das fünfte Schaltelement in einem sechsten Koppelzustand schaltbar. Beispielsweise kann das fünfte Schaltelement, insbesondere relativ zu dem Gehäuse und/oder translatorisch und/oder in axialer Richtung des Rotors, auch in wenigstens eine, den sechsten Koppelzustand bewirkende, sechste Koppelstellung bewegt werden. In dem sechsten Koppelzustand ist mittels des fünften Schaltelements das zweite Element drehfeste mit dem sechsten Element gekoppelt. Dabei ist es denkbar, dass in dem sechsten Koppelzustand das fünfte Schaltelement das vierte Element für eine insbesondere um die Hauptrotationsachse relativ zu dem zweiten Element und/oder relativ zu dem sechsten Element erfolgende Drehung freigibt. Ferner ist es denkbar, dass in dem fünften Koppelzustand das fünfte Schaltelement das sechste Element für eine insbesondere um die Hauptrotationsachse relativ zu dem zweiten Element und relativ zu dem vierten Element erfolgende Drehung freigibt. Außerdem ist es beispielsweise denkbar, dass in dem fünften Entkoppelzustand das fünfte Schaltelement das zweite Element für eine insbesondere um die Hauptrotationsachse relativ zu dem vierten Element und relativ zu dem sechsten Element erfolgende Drehung freigibt. Ferner ist es denkbar, dass der fünfte Entkoppelzustand dem sechsten Koppelzustand entspricht. Ferner kann beispielsweise das fünfte Schaltelement in einen siebten Koppelzustand geschaltet werden. Beispielsweise kann das fünfte Schaltelement in wenigstens eine, den siebten Koppelzustand bewirkende, siebte Koppelstellung, insbesondere relativ zu dem Gehäuse und/oder translatorisch und/oder in axialer Richtung des Rotors, bewegt werden. In dem siebten Koppelzustand sind beispielsweise mittels des fünften Schaltelements sowohl das vierte Element als auch das sechste Element gleichzeitig mit dem zweiten Element drehfest verbunden. Somit kann auf besonders bauraumgünstige Weise eine besonders vorteilhafte Fahrbarkeit realisiert werden.

Alternativ hierzu wäre der Einsatz eines weiteren, zusätzlich zu dem ersten, zweiten, dritten, vierten und fünften Schaltelement vorgesehenen Umschaltelements denkbar, wobei beispielsweise mittels des fünften Schaltelements das zweite Element drehfest mit dem vierten Element koppelbar ist, und wobei mittels des Umschaltelements das zweite Element mit dem sechsten Element drehfest koppelbar oder verbindbar ist.

Eine weitere Ausführungsform zeichnet sich durch ein sechstes Schaltelement aus, mittels welchem das sechste Element drehfest mit dem Gehäuse koppelbar ist. Somit ist beispielsweise das sechste Schaltelement zwischen wenigstens einem achten Koppelzustand und wenigstens einem siebten Entkoppelzustand umschaltbar. Beispielsweise kann das sechste Schaltelement, insbesondere translatorisch und/oder relativ zu dem Gehäuse und/oder in axialer Richtung des Rotors, zwischen wenigstens einer, den achten Koppelzustand bewirkenden, achten Koppelstellung und wenigstens einer, den siebten Entkoppelzustand bewirkenden, siebten Entkoppelstellung bewegt werden. In dem achten Koppelzustand ist mittels des sechsten Schaltelements das sechste Element drehfest mit dem Gehäuse gekoppelt, mithin drehfest an dem Gehäuse festgelegt. In dem siebten Entkoppelzustand gibt das sechste Schaltelement das sechste Element für eine insbesondere um die Hauptrotationsachse relativ zu dem Gehäuse erfolgende Drehung frei. Hierdurch kann ein besonders effizienter Betrieb auf bauraumgünstige Weise dargestellt werden.

Um die Teileanzahl, die Kosten, das Gewicht und den Bauraumbedarf besonders gering halten zu können, ist es in weiterer Ausgestaltung der Erfindung vorgesehen, dass das dritte Schaltelement und das vierte Schaltelement axial, das heißt in axialer Richtung des Rotors, benachbart angeordnet und zu einem Koppelschaltelement mit zumindest zwei Schaltstellungen zusammengefasst sind. Insbesondere ist es dabei denkbar, dass das dritte Schaltelement und das vierte Schaltelement einstückig miteinander ausgebildet sind. Somit entspricht beispielsweise die dritte Koppelstellung der vierten Entkoppelstellung beziehungsweise der dritte Koppelzustand dem vierten Entkoppelzustand, und vorzugsweise entspricht die vierte Entkoppelstellung der vierten Koppelstellung beziehungsweise der dritte Entkoppelzustand dem vierten Koppelzustand. Somit ist beispielsweise eine erste der Schaltstellungen die dritte Koppelstellung beziehungsweise die vierte Entkoppelstellung, und eine zweite der Schaltstellungen ist beispielsweise die vierte Koppelstellung beziehungsweise die dritte Entkoppelstellung.

Bei einer weiteren, besonders vorteilhaften Ausführungsform der Erfindung ist ein siebtes Schaltelement, mittels welchem das vierte Element drehfest mit dem Gehäuse koppelbar ist. Somit ist beispielsweise das siebte Schaltelement zwischen einem zehnten Koppelzustand und einem achten Entkoppelzustand umschaltbar. Beispielsweise kann das siebte Schaltelement, insbesondere translatorisch und/oder relativ zu dem Gehäuse und/oder in axialer Richtung des Rotors, zwischen wenigstens einer, den zehnten Koppelzustand bewirkenden, zehnten Koppelstellung und wenigstens einer, den achten Entkoppelzustand bewirkenden, achten Entkoppelstellung bewegt werden. In dem zehnten Koppelzustand ist mittels des siebten Schaltelements das vierte Element drehfest mit dem Gehäuse gekoppelt, das heißt drehfest an dem Gehäuse festgelegt. In dem achten Entkoppelzustand gibt das siebte Schaltelement das vierte Element für eine insbesondere um die Hauptrotationsachse relativ zu dem Gehäuse erfolgende Drehung frei. Dadurch kann auf besonders bauraumgünstige Weise eine besonders vorteilhafte Fahrbarkeit realisiert werden.

Im Rahmen der vorliegenden Offenbarung sind die in der vorliegenden Beschreibung verwendeten und auch als Ordinalia bezeichneten Ordnungszahlwörter wie "erster", "erste", "zweiter", "zweite", "dritter", "dritte", "vierter", "vierte", "fünfter", "fünfte", "sechster", "sechste", "siebter", "siebte" Element etc. - falls nichts anderes angegeben ist - nicht als Ordnungszahlwörter an sich zu verstehen, welche eine Reihenfolge oder eine Anzahl angeben, sondern die in der Beschreibung verwendeten Ordnungszahlwörter sind, falls nichts anderes angegeben ist - vielmehr als Adjektive anzusehen, um die den jeweiligen Ordnungszahlwörtern zugeordneten Begriffe wie beispielsweise "Schaltelement", "Koppelzustand", "Entkoppelzustand", "Koppelstellung", "Entkoppelstellung" Element etc. voneinander unterscheiden, mithin begrifflich auseinander halten zu können und somit auf diese den Ordnungszahlwörtern zugeordneten Begriffe eindeutig bezugnehmen zu können.

Eine weitere Ausführungsform zeichnet sich dadurch aus, dass das vierte Schaltelement, der Elektromotor, der erste Planetenradsatz, der zweite Planetenradsatz, das Eingangszahnrad und das siebte Schaltelement in Richtung der antreibbaren, zweiten Achse (Hauptantriebsachse) und dabei insbesondere entlang der axialen Richtung des Rotors betrachtet in der folgenden Reihenfolge nacheinander beziehungsweise aufeinanderfolgend angeordnet sind: Das vierte Schaltelement - der Elektromotor - der erste Planetenradsatz - der zweite Planetenradsatz - das Eingangszahnrad - das siebte Schaltelement. Dadurch kann eine besonders bauraumgünstige Bauweise des elektrischen Antriebs dargestellt werden.

Bei einer weiteren, besonders vorteilhaften Ausführungsform der Erfindung umfasst das Kraftfahrzeug einen koaxial zu dem Elektromotor angeordneten, zweiten Elektromotor, welcher einen zweiten Stator und einen relativ zu dem zweiten Stator drehbaren, zweiten Rotor aufweist. Insbesondere ist der zweite Rotor um eine zweite Rotorachse, welche auch als zweite Rotordrehachse bezeichnet wird, relativ zu dem Stator drehbar. Da die Elektromotoren koaxial zueinander angeordnet sind, sind die Rotoren koaxial zueinander angeordnet, sodass die Rotorachsen zusammenfallen. Somit fällt die zweite Rotorachse mit der Hauptrotationsachse zusammen, sodass der zweite Elektromotor beziehungsweise der zweite Rotor auch koaxial zu den Planetenradsätzen angeordnet ist. Dabei ist der zweite Rotor drehfest mit einem der Elemente des zweiten Planetenradsatzes gekoppelt oder koppelbar. Hierdurch kann auf bauraumgünstige Weise ein besonders vorteilhafter Antrieb dargestellt werden.

Dabei hat es sich als besonders vorteilhaft gezeigt, wenn der zweite Rotor drehfest mit dem vierten Element gekoppelt oder koppelbar ist, wodurch auf besonders vorteilhafte, bauraumgünstige Weise eine besonders gute Fahrbarkeit dargestellt werden kann.

In weiterer, besonders vorteilhafter Ausgestaltung der Erfindung sind der erste Elektromotor, der erste Planetenradsatz, der zweite Planetenradsatz, das Eingangszahnrad und der zweite Elektromotor in Richtung der antreibbaren, zweiten Achse gesehen und somit beispielsweise entlang der axialen Richtung des Rotors betrachtet in der folgenden Reihenfolge nacheinander angeordnet: der erste Elektromotor - der erste Planetenradsatz - der zweite Planetenradsatz - das Eingangszahnrad - der zweite Elektromotor. Dadurch kann eine besonders bauraumgünstige Bauweise dargestellt werden.

In weiterer, besonders vorteilhafter Ausführungsform der Erfindung umfasst das Kraftfahrzeug einen weiteren Elektromotor mit einem weiteren Stator und einem weiteren Rotor, welcher koaxial zu dem ersten Rotor und den Planetenradsätzen angeordnet ist. Somit ist der weitere Elektromotor koaxial zu dem ersten Elektromotor angeordnet. Beispielsweise ist der weitere Rotor um eine weitere Rotorachse relativ zu dem weiteren Stator drehbar. Da der weitere Elektromotor koaxial zu dem ersten Elektromotor und koaxial zu den Planetenradsätzen angeordnet ist, fällt die weitere Rotorachse mit der ersten Rotorachse und mit der Hauptrotationsachse zusammen. Dabei ist ein dritter Planetenradsatz vorgesehen, welcher ein siebtes Element, ein achtes Element und ein neuntes Element aufweist. Eines der Elemente des dritten Planetenradsatzes ist ein drittes Sonnenrad, welches auch als dritte Sonne bezeichnet wird. Eines der Elemente des dritten Planetenradsatzes ist ein dritter Planetenträger, welcher auch als dritter Steg bezeichnet wird. Eines der Elemente des dritten Planetenradsatzes ist ein drittes Hohlrad.

Des Weiteren ist bei dieser Ausführungsform ein vierter Planetenradsatz vorgesehen, welcher ein zehntes Element, ein elftes Element und ein zwölftes Element aufweist. Eines der Elemente des vierten Planetenradsatzes ist ein viertes Sonnenrad, welches auch als vierte Sonne bezeichnet wird. Eines der Elemente des vierten Planetenradsatzes ist ein vierter Planetenträger, welcher auch als vierter Steg bezeichnet wird. Eines der Elemente des vierten Planetenradsatzes ist ein viertes Hohlrad. Beispielsweise weist der jeweilige Planetenradsatz wenigstens ein oder mehrere Planetenräder auf, wobei das jeweilige Planetenrad drehbar an dem jeweiligen Steg des jeweiligen Planetenradsatzes gehalten ist. Dabei ist es insbesondere vorgesehen, dass das jeweilige Planetenrad des jeweiligen Planetenradsatzes einerseits, insbesondere direkt, mit der jeweiligen Sonne des jeweiligen Planetenradsatzes und andererseits, insbesondere direkt, mit dem jeweiligen Hohlrad des jeweiligen Planetenradsatzes kämmt.

Vorzugsweise ist es dabei vorgesehen, dass der zweite Rotor drehfest mit dem siebten Element gekoppelt oder koppelbar ist, wobei das achte Element mit dem zehnten Element, insbesondere drehmomentübertragend oder drehfest, gekoppelt oder koppelbar ist, und wobei das elfte Element drehfest mit dem Eingangszahnrad des Winkeltriebes gekoppelt oder koppelbar ist. Hierdurch kann auf besonders bauraumgünstige Weise eine besonders hohe Leistungsfähigkeit des elektrischen Antriebs dargestellt werden, sodass der elektrische Antrieb besonders vorteilhaft für gewichtsintensive Kraftfahrzeuge verwendet und auch solche gewichtsintensiven Kraftfahrzeuge effektiv und effiziente antreiben kann, insbesondere rein elektrisch.

Schließlich hat es sich als besonders vorteilhaft gezeigt, wenn in der Richtung der antreibbaren, zweiten Achse gesehen oder insbesondere in axialer Richtung des Rotors betrachtet der erste Elektromotor, der erste Planetenradsatz, der zweite Planetenradsatz, das Eingangszahnrad des Winkeltriebes, der vierte Planetenradsatz, der dritte Planetenradsatz und der weitere Elektromotor in der folgenden Reihenfolge nacheinander angeordnet sind: der erste Elektromotor - der erste Planetenradsatz - der zweite Planetenradsatz - das Eingangszahnrad des Winkeltriebes - der vierte Planetenradsatz - der dritte Planetenradsatz - der weitere Elektromotor. Dadurch kann eine besonders bauraumgünstige Weise des elektrischen Antriebs dargestellt werden.

Die Zeichnung zeigt in:
- Fig. 1: eine schematische Draufsicht eines Kraftfahrzeugs, mit einem elektrischen Antrieb;
- Fig. 2: eine schematische Darstellung einer ersten Ausführungsform des elektrischen Antriebs;
- Fig. 3: eine schematische Darstellung einer zweiten Ausführungsform des elektrischen Antriebs; und
- Fig. 4: eine schematische Darstellung einer dritten Ausführungsform des elektrischen Antriebs.

In den Fig. sind gleiche oder funktionsgleiche Elemente mit gleichen Bezugszeichen versehen.

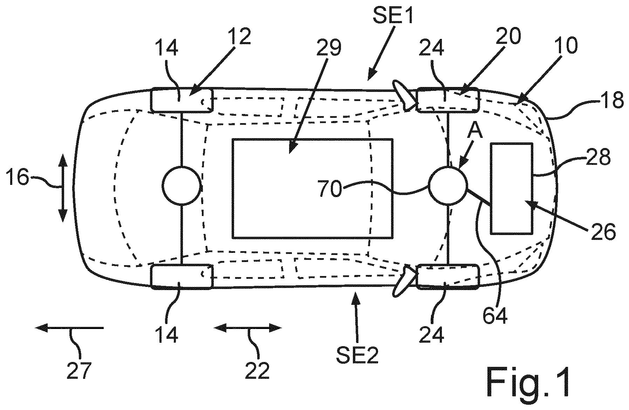

Fig. 1 zeigt in einer schematischen Draufsicht ein Kraftfahrzeug 10, welches vorzugsweise als Kraftwagen ausgebildet ist. Ganz vorzugsweise ist das Kraftfahrzeug 10 als ein Nutzfahrzeug, insbesondere als ein Lastkraftwagen (LKW), ausgebildet. Das Kraftfahrzeug 10 weist eine erste Achse 12 auf, welche auch als erste Fahrzeugachse bezeichnet wird. Die erste Achse 12 ist eine lenkbare Achse. Dies bedeutet, dass die erste Achse 12 wenigstens oder genau zwei erste Fahrzeugräder 14 aufweist, welche auch als erste Räder bezeichnet werden. Aus Fig. 1 ist erkennbar, dass die Fahrzeugräder 14 in Fahrzeugquerrichtung voneinander beabstandet und auf in Fahrzeugquerrichtung einander gegenüberliegenden Seiten SE1 uns SE2 des Kraftfahrzeugs 10 angeordnet sind. Die Fahrzeugquerrichtung ist in Fig. 1 durch einen Doppelpfeil 16 veranschaulicht. Die Fahrzeugräder 14 können, insbesondere gemeinsam, um eine jeweilige Gelenkachse relativ zu einem in Fig. 1 nicht dargestellten Aufbau des Kraftfahrzeugs 10 verschwenkt und dadurch gelenkt werden, wodurch Spurwechsel, Richtungsänderungen und Kurvenfahrten des Kraftfahrzeugs 10 bewirkt werden können. In Fig. 1 befinden sich die Fahrzeugräder 14 in ihrer Geradeausstellung, mittels welcher eine Geradeausfahrt des Kraftfahrzeugs 10 bewirkbar ist. Somit kann das Kraftfahrzeug 10 in der Geradeausstellung der Fahrzeugräder 14 entlang einer Geraden gefahren werden. Das Kraftfahrzeug 10 umfasst außerdem einen Rahmen 18, welcher auch als Fahrgestell bezeichnet wird. Beispielsweise ist der Rahmen 18 als ein Leiterrahmen ausgebildet. Der zuvor genannte Aufbau ist vorzugsweise separat von dem Rahmen 18 ausgebildet und an dem Rahmen 18 gehalten. Der Aufbau ist beispielsweise eine Fahrerkabine, die einen Innenraum des Kraftfahrzeugs 10 begrenzt. Dabei kann sich insbesondere während einer Fahrt des Kraftfahrzeugs 10 der Fahrer des Kraftfahrzeugs 10 im Innenraum und somit in dem Aufbau aufhalten.

Das Kraftfahrzeug 10 umfasst außerdem wenigstens oder genau eine zweite Achse 20, welche auch als zweite Fahrzeugachse bezeichnet wird. Aus Fig. 1 ist erkennbar, dass die Achsen 12 und 20 in Fahrzeuglängsrichtung hintereinander beziehungsweise aufeinanderfolgend angeordnet sind, wobei die Fahrzeuglängsrichtung in Fig. 1 durch einen Doppelpfeil 22 veranschaulicht ist und senkrecht zur Fahrzeugquerrichtung. Die zweite Achse 20 weist wenigstens oder genau zwei zweite Fahrzeugräder 24 auf, welche auch als zweite Räder bezeichnet werden. Die Fahrzeugräder 24 sind in Fahrzeugquerrichtung voneinander beabstandet angeordnet und auf den jeweiligen, in Fahrzeugquerrichtung einander gegenüberliegenden Seiten SE1 und SE2 angeordnet. In Fig. 1 ist durch einen Pfeil 27 eine Vorwärtsfahrrichtung des Kraftfahrzeugs 10 gezeigt, welches entlang seiner Vorwärtsfahrrichtung oder in seiner Vorwärtsfahrrichtung vorwärts gefahren wird. Bezogen auf die Vorwärtsfahrrichtung, welche parallel zur Fahrzeuglängsrichtung verläuft beziehungsweise mit der Fahrzeuglängsrichtung zusammenfällt, ist die Seite SE1 die rechte Seite des Kraftfahrzeugs 10, sodass die Seite SE2 die linke Seite des Kraftfahrzeugs 10 ist. In Fahrzeuglängsrichtung bezogen auf die Vorwärtsfahrrichtung ist die Achse 20 in der Achse 12 angeordnet. Die Achse 20 ist eine angetriebene, das heißt antreibbare Achse. Hierunter ist insbesondere folgendes zu verstehen: Das Kraftfahrzeug 10 weist einen elektrischen Antrieb 26 auf, mittels welchem die Achse 20, das heißt die Fahrzeugräder 24, insbesondere rein, elektrisch angetrieben werden können. Hierdurch kann das Kraftfahrzeug insgesamt mittels des elektrischen Antriebs 26, insbesondere rein, elektrisch angetrieben werden, wobei das Kraftfahrzeug 10 beispielsweise als reines Elektrofahrzeug oder aber als Hybridfahrzeug ausgebildet sein kann.

Das Kraftfahrzeug 10 weist eine Traktionsbatterie 29 auf, welche beispielsweise in Fahrzeuglängsrichtung zwischen den Achsen 12 und 20 angeordnet ist. die Traktionsbatterie 29 ist ein elektrischer Energiespeicher, in welchem elektrische Energie zu speichern oder gespeichert ist. Vorzugsweise ist die Traktionsbatterie 29 eine Hochvolt-Komponente, deren elektrische Spannung, insbesondere elektrische Betriebs- oder Nennspannung, vorzugsweise größer als 50 Volt, insbesondere größer als 60 Volt, ist, und ganz vorzugsweise mehrere 100 Volt beträgt. Wie im Folgenden noch genauer erläutert wird, kann der elektrische Antrieb 26 mit der in der Traktionsbatterie 29 gespeicherten, elektrischen Energie versorgt werden, um dadurch beispielsweise die Fahrzeugräder 24, insbesondere rein, elektrisch anzutreiben. Insbesondere ist die elektrische Energie in der Traktionsbatterie 29 elektrochemisch zu speichern oder gespeichert.

Aus Fig. 1 ist besonders gut erkennbar, dass der elektrische Antrieb 26 in Fahrzeuglängsrichtung und insbesondere bezogen auf die Vorwärtsfahrrichtung hinter der in Fahrzeuglängsrichtung hinter der Achse 12 angeordneten Achse 20 angeordnet ist. Dadurch kann in Fahrzeuglängsrichtung zwischen den Achsen 12 und 20 besonders viel Platz geschaffen werden, in welchem die Traktionsbatterie 29 und/oder andere, weitere Komponenten vorteilhaft angeordnet werden können.

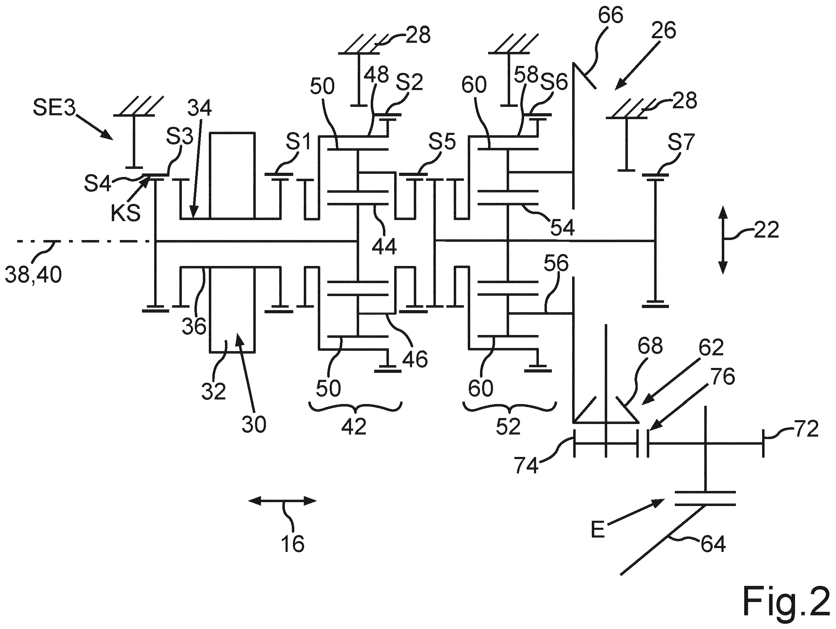

Fig. 2 zeigt eine erste Ausführungsform des elektrischen Antriebs 26. Der elektrische Antrieb 26 weist ein in Fig. 2 besonders schematisch dargestelltes Gehäuse 28 und wenigstens oder genau einen Elektromotor 30 auf, welcher auch als erster Elektromotor bezeichnet wird. Der Elektromotor 30 weist einen Stator 32 auf, welcher auch als erster Stator bezeichnet wird. Außerdem weist der Elektromotor 30 einen Rotor 34 auf, welcher auch als erster Rotor bezeichnet wird. Der Rotor 34 umfasst eine Rotorwelle 36, welche auch als erste Rotorwelle bezeichnet wird. Insbesondere kann der Rotor 34 mittels des Stators 32 angetrieben und dadurch um eine erste Rotorachse 38 relativ zu dem Gehäuse 28und relativ zu dem Stator 32 gedreht werden. Die erste Rotorachse 38, welche einfach auch als Rotorachse bezeichnet wird, fällt mit einer Hauptrotationsachse 40 zusammen, die im Folgenden noch genauer erläutert wird. Insbesondere kann der Elektromotor 30 über seinen Rotor 34 und dabei insbesondere über die Rotorwelle 36 Drehmomente als Antriebsmomente bereitstellen, mittels welchen die Fahrzeugräder 24 und somit das Kraftfahrzeug 10, insbesondere rein, elektrisch angetrieben werden können.

Der elektrische Antrieb 26 weist einen ersten Planetenradsatz 42 auf, welcher koaxial zu der ersten Rotorachse 38 und somit koaxial zu dem Rotor 34 und zu dem Elektromotor 30 angeordnet ist. Der erste Planetenradsatz 42 weist ein erstes Element, ein zweites Element und ein drittes Element auf. Bei der in Fig. 2 gezeigten ersten Ausführungsform ist das erste Element ein erstes Sonnenrad 44, welches auch als erste Sonne bezeichnet wird. Außerdem ist das zweite Element ein erster Planetenträger 46, welcher auch als erster Steg bezeichnet wird. Das dritte Element ist ein erstes Hohlrad 48. Des Weiteren umfasst der erste Planetenradsatz 42 erste Planetenräder 50, welche drehbar an dem Planetenträger 46 gelagert sind und dabei jeweils, insbesondere direkt, einerseits mit dem Hohlrad 48 und andererseits, insbesondere direkt, mit dem Sonnenrad 44 kämmen beziehungsweise in Eingriff stehen. Zumindest eines der Elemente des Planetenradsatzes 42, vorliegend das Sonnenrad 44 und der Planetenträger 46 kann, wenn das zumindest eine Element des Planetenradsatzes 42 nicht drehfest mit dem Gehäuse verbunden ist, um eine erste Planetenradsatzdrehachse relativ zu dem Gehäuse 28 gedreht werden. Dabei fällt die erste Planetenradsatzdrehachse mit der Hauptrotationsachse 40 zusammen beziehungsweise ist die Hauptrotationsachse 40, sodass der Planetenradsatz 42 koaxial zu dem Elektromotor 30 angeordnet ist.

Der elektrische Antrieb 26 weist außerdem einen zweiten Planetenradsatz 52 auf, welcher koaxial zu der ersten Rotorachse 38 und somit koaxial zu dem Rotor 34, zu dem Elektromotor 30 und zu dem ersten Planetenradsatz 42 angeordnet ist. Der zweite Planetenradsatz 52 weist ein viertes Element, ein fünftes Element und ein sechstes Element auf. Bei der in Fig. 2 gezeigten ersten Ausführungsform ist das fünfte Element ein zweites Sonnenrad 54, welches auch als zweite Sonne bezeichnet wird. Das fünfte Element ist bei der ersten Ausführungsform ein zweiter Planetenträger 56, welcher auch als zweiter Steg bezeichnet wird. Außerdem ist das sechste Element ein zweites Hohlrad 58. Des Weiteren weist der zweite Planetenradsatz 52 wenigstens ein oder mehrere, zweite Planetenräder 60 auf, welche drehbar an dem zweiten Steg gehalten sind und einerseits, insbesondere direkt, mit dem zweiten Hohlrad 58 und andererseits, insbesondere direkt, mit dem zweiten Sonnenrad 54 kämmen beziehungsweise in Eingriff stehen. Zumindest eines der Elemente des zweiten Planetenradsatzes 52, vorliegend das Sonnenrad 54 und der Planetenträger 56, kann um eine zweite Planetenradsatzdrehachse relativ zu dem Gehäuse 28 gedreht werden, wenn das zumindest eine Element des zweiten Planetenradsatzes 52 nicht drehfest mit dem Gehäuse 28 verbunden ist. Dabei fällt die zweite Planetenradsatzdrehachse mit der ersten Planetenradsatzdrehachse und somit mit der ersten Rotorachse 38 und mit der Hauptrotationsachse 40 zusammen, sodass die Elemente des Planetenradsatzes 52 koaxial zueinander angeordnet sind, und die Elemente des Planetenradsatzes 42 sind koaxial zueinander angeordnet, und die Elemente des Planetenradsatzes 52 sind koaxial zu den Elementen des Planetenradsatzes 42, koaxial zu dem Rotor 34 und somit zu der Rotorwelle 36 und koaxial zu dem Elektromotor 30, mithin koaxial zur ersten Rotorachse 38 angeordnet. Wieder mit anderen Worten ausgedrückt sind die Planetenradsätze 42 und 45 koaxial zueinander und jeweils koaxial zu dem Elektromotor 30 angeordnet. In axialer Richtung des Rotors 34, das heißt entlang der ersten Rotorachse 38 und somit entlang der Hauptrotationsachse 40 betrachtet sind der Elektromotor 30, der erste Planetenradsatz 42 und der zweite Planetenradsatz 52 in folgender Reihenfolge nacheinander angeordnet: Elektromotor 30 - der erste Planetenradsatz 42 - der zweite Planetenradsatz 52.

Wenn im Folgenden von der Hauptrotationsachse 40 die Rede ist so ist darunter - falls nichts anderes angegeben ist - auch die erste Rotorachse 38 und die jeweilige Planetenradsatzdrehachse zu verstehen, da die Hauptrotationsachse 40 mit der ersten Rotorachse und dem Planetenradsatzdrehachsen zusammenfällt.

Besonders gut aus Fig. 2 ist erkennbar, dass die Rotorachse 38 rechtwinkelig, das heißt senkrecht, zu der auch in Fig. 2 durch den Doppelpfeil 22 veranschaulichten Fahrzeuglängsrichtung verläuft, sodass die Hauptrotationsachse 40 beziehungsweise die erste Rotorachse 38 zumindest im Wesentlichen parallel zu der Fahrzeugquerrichtung (Doppelpfeil 16) verläuft. Somit ist ein Quereinbau des elektrischen Antriebs 26 vorgesehen. Mit anderen Worten ist der elektrische Antrieb 26 quer eingebaut oder quer verbaut.

Um eine besonders kompakte Bauweise und einen besonders effizienten Antrieb realisieren zu können, sind in Fahrzeuglängsrichtung die erste Achse 12, die Traktionsbatterie 29, die zweite Achse 20 und der elektrische Antrieb 26 in der folgenden Reihenfolge nacheinander angeordnet: Die erste Achse 12 - die Traktionsbatterie 29 - die zweite Achse 20 - der elektrische Antrieb 26. Außerdem ist das Gehäuse 28 starr, das heißt unter Umgehung der Achsen 12 und 20 an den Rahmen 18 angebunden. Mit anderen Worten ist der elektrische Antrieb 26 nicht etwa achsfest, das heißt nicht etwa unter Vermittlung einer der Achsen 12 und 20 und somit auch nicht unter Vermittlung einer Achsfederung an den Rahmen 18 angebunden, sondern das Gehäuse 28 beziehungsweise der elektrische Antrieb 26 ist rahmenfest. Natürlich umfasst der Begriff der "starren Anbindung" auch eine leicht gedämpfte Anbindung wie zum Beispiel eine Anbindung an den Rahmen 18 über etwaige Gummi-Dämpfungselemente. Mit dem Begriff der "starren Anbindung" soll betont werden, dass wirkungsmäßig zwischen dem Gehäuse 28 und dem Rahmen 18 nicht die Achsfederung angeordnet ist. Daurch ist das Gehäuse 28 zusammen mit dem Rahmen 18 gegenüber den Fahrzeugrädern 14, 24 gefedert. Dadurch führen beispielsweise dann, wenn die Fahrzeugräder 14 und 24 über Unebenheiten eines Bodens gefahren werden, entlang welchem das Kraftfahrzeug 10 gefahren wird, zumindest im Wesentlichen in Fahrzeughochrichtung erfolgende Ein- und Ausfederbewegungen der Fahrzeugräder 14, 24 relativ zu dem Rahmen 18 nicht zu Ein- und Ausfederbewegungen des Gehäuses 28 relativ zu dem Rahmen 18. Somit ist das Gehäuse 28 nicht wie beispielsweise die Fahrzeugräder 14 und 24 eine ungefederte Masse, sondern genauso wie der Rahmen 18 eine gefederte Masse, sodass ein übermäßiger Verschleiß vermieden werden kann.

Des Weiteren weist der elektrische Antrieb 26 einen Winkeltrieb 62 auf, und das Kraftfahrzeug 10 weist eine in Fig. 1 und 2 besonders schematisch dargestellte Gelenkwelle 64 auf, welche sich beispielsweise von dem Winkeltrieb 62 in Fahrzeuglängsrichtung, das heißt parallel zur Fahrzeuglängsrichtung oder vorliegend schräg zur Fahrzeuglängsrichtung nach vorne hin, weg erstreckt und zu der antreibbaren Achse 20 hin erstreckt. Der Winkeltrieb 62 weist ein Eingangszahnrad 66 und ein Ausgangszahnrad 68 auf, welches, insbesondere direkt, mit dem Eingangszahnrad 66 kämmt beziehungsweise in Eingriff steht. Bei der in Fig. 2 gezeigten ersten Ausführungsform ist beispielsweise das Eingangszahnrad 66 ein Tellerrad, wobei das Ausgangszahnrad 68 beispielsweise ein Kegelrad ist. Eines der Elemente des zweiten Planetenradsatzes 52 ist drehfest mit dem Eingangszahnrad 66 gekoppelt oder koppelbar. Bei der ersten Ausführungsform ist das Eingangszahnrad 66, insbesondere permanent, drehfest mit dem Planetenträger 56 gekoppelt, das heißt verbunden. Somit ist das Eingangszahnrad 66 von dem Planetenträger 56 antreibbar, sodass das Ausgangszahnrad 68 über das Eingangszahnrad 66 von dem Planetenträger 56 antreibbar ist.

Das Ausgangszahnrad 68 ist zumindest mittelbar mit einer Eingangsseite E der Gelenkwelle 64, insbesondere drehmomentübertragend gekoppelt oder koppelbar, sodass die Gelenkwelle 64 über ihre Eingangsseite E von dem Ausgangszahnrad 68 und somit von dem Winkeltrieb 62 antreibbar ist. Somit ist die Gelenkwelle 64 über das Ausgangszahnrad 68 von dem Eingangszahnrad 66 und über dieses von dem Planetenträger 56 antreibbar. Die Gelenkwelle 64 weist auch eine von der Eingangsseite E antreibbare Ausgangsseite A auf, welche, insbesondere permanent, drehmomentübertragend, insbesondere drehfest, mit der Eingangsseite e koppelbar oder gekoppelt ist. Insbesondere ist es vorgesehen, dass die Eingangsseite E, insbesondere permanent, drehmomentübertragend mit der Ausgangsseite A gekoppelt ist. die Ausgangsseite A der Gelenkwelle 64 ist mit einem auch als Differentialgetriebe bezeichneten oder als Differentialgetriebe ausgebildeten Achsgetriebe 70 der antreibbaren Achse 20 gekoppelt oder koppelbar. Insbesondere ist es denkbar, dass die Ausgangsseite A, insbesondere permanent, drehmomentübertragend mit dem Achsgetriebe 70 gekoppelt oder koppelbar ist. Somit kann das Achsgetriebe 70 von der Ausgangsseite A und über die Ausgangsseite A von der Eingangsseite E angetrieben werden. Es ist erkennbar, dass die Fahrzeugräder 24 über das Achsgetriebe 70 von der Gelenkwelle 64 und über diese von dem elektrischen Antrieb 26, insbesondere rein, elektrisch angetrieben werden können. Unter dem Merkmal, dass die Gelenkwelle 64 parallel oder schräg zur Fahrzeuglängsrichtung verläuft, ist insbesondere zu verstehen, dass die axiale Richtung der Gelenkwelle 64 parallel oder schräg zur Fahrzeuglängsrichtung verläuft. Von dem elektrischen Antrieb 26 über den Winkeltrieb 62 bereitgestellte Drehmomente zum Antreiben der Fahrzeugräder 24 können über die Gelenkwelle 64 in Fahrzeuglängsrichtung nach vorne hin und dabei zu dem Achsgetriebe 70 geführt und über das Achsgetriebe 70 auf die Fahrzeugräder 24 übertragen werden, wodurch die Fahrzeugräder 24 antreibbar sind.

Auch das jeweilige Hohlrad 48 beziehungsweise 58 kann bei der ersten Ausführungsform dann, wenn es nicht drehfest mit dem Gehäuse 28 verbunden ist, um die Hauptrotationsachse 40 relativ zu dem Gehäuse 28 gedreht werden. Bei der ersten Ausführungsform ist zwischen der Eingangsseite E der Gelenkwelle 64 und dem Winkeltrieb 62 wenigstens oder genau eine Stirnradstufe 72 angeordnet, welche ein erstes Zahnrad 74 und ein zweites Zahnrad 76 aufweist. Die Zahnräder 74 und 76 sind vorzugsweise Stirnräder. Die Zahnräder 74 und 67 kämmen direkt miteinander, das heißt stehen direkt in Eingriff miteinander. Das Zahnrad 74 ist, insbesondere permanent, drehfest mit dem Ausgangszahnrad 68 gekoppelt, das heißt verbunden. Das zweite Zahnrad 76 ist, insbesondere permanent, drehfest mit dem Eingangsseite E gekoppelt, das heißt verbunden, sodass die Eingangsseite E über das Zahnrad 76 von dem Zahnrad 74 antreibbar ist, und das Zahnrad 76 ist über das Zahnrad 74 von dem Ausgangszahnrad 68 antreibbar.

Bei der zweiten Ausführungsform weist der elektrische Antrieb 26 ein erstes Schaltelement S1 auf, mittels welchem das Hohlrad 48 drehfest mit dem Rotor 34 und somit mit der Rotorwelle 36 koppelbar, das heißt verbindbar ist. Des Weiteren weist der elektrische Antrieb 26 ein zweites Schaltelement S2 auf, mittels welchem das Hohlrad 48 drehfest mit dem Gehäuse 28 koppelbar, das heißt verbindbar ist. Der elektrische Antrieb 26 weist auch ein drittes Schaltelement S3 auf, mittels welchem das Sonnenrad 44 drehfest mit dem Rotor 34 koppelbar ist. Der elektrische Antrieb 26 umfasst außerdem ein viertes Schaltelement S4, mittels welchem das Sonnenrad 44 drehfest mit dem Gehäuse 28 koppelbar ist. Das vierte Schaltelement S4 und vorliegend auch das dritte Schaltelement S3 sind auf einer in axialer Richtung des Rotors 34 von dem ersten Planetenradsatz 42 abgewandten Seite SE3 des Elektromotors 30 angeordnet. Der elektrische Antrieb 26 umfasst außerdem ein fünftes Schaltelement S5, mittels welchem der Planetenträger 46 drehfest mit dem zweiten Sonnenrad 54 koppelbar ist. Bei der zweiten Ausführungsform ist der zweite Planetenträger 56, insbesondere permanent, drehfest mit dem Eingangszahnrad 66 des Winkeltriebs 62 gekoppelt oder koppelbar.

Das fünfte Schaltelement S5 ist dazu ausgebildet, den Planetenträger 46, insbesondere gleichzeitig, drehfest mit dem zweiten Sonnenrad 54 und drehfest mit dem zweiten Hohlrad 58 zu koppeln. Insbesondere kann das fünfte Schaltelement S5 zwischen drei Schaltzuständen umgeschaltet werden, welche auch als Koppelzustände bezeichnet werden können. In einem ersten der Schaltzustände ist mittels des fünften Schaltelements S5 das zweite Element, das heißt der erste Planetenträger 46 drehfest mit dem vierten Element, das heißt mit dem zweiten Sonnenrad 54 verbunden, insbesondere während das fünfte Schaltelement S5 das sechste Element, mithin das zweite Hohlrad 58 für eine um die Hauptrotationsachse 40 relativ zu dem zweiten Element und dem vierten Element erfolgende Drehung freigibt. In einem zweiten der Schaltzustände ist mittels des fünften Schaltelements S5 das zweite Element, mithin der Planetenträger 46, drehfest mit dem sechsten Element, mithin mit dem zweiten Hohlrad 58, gekoppelt, das heißt Verbunden, während das fünfte Schaltelement S5 das vierte Element, mithin das zweit Sonnenrad 54 für eine um die Hauptrotationsachse 40 relativ zu dem zweiten Element und dem sechsten Element erfolgende Drehung freigibt. In einem dritten der Schaltzustände wird mittels des fünften Schaltelements S5 das zweite Element, mithin der ersten Planetenträger 46, gleichzeitig drehfest mit dem vierten Element, mithin mit dem zweiten Sonnenrad 54 und drehfest mit dem sechsten Element, mithin mit dem Hohlrad 58 gekoppelt oder verbunden, sodass in dem dritten Schaltzustand mittels des fünften Schaltelements S5 das zweite Element, das vierte Element und das sechste Element drehfest miteinander verbunden sind. Somit können der ersten Schaltzustand und der zweite Schaltzustand auch als Entkoppelzustände angesehen werden, da sich im ersten Schaltzustand das sechste Element um die Hauptrotationsachse 40 relativ zu dem zweiten Element, relativ zu dem vierten Element und relativ zu dem sechsten Element drehen kann, und da sich in dem zweiten Schaltzustand das vierte Element um die Hauptrotationsachse 40 relativ zu dem zweiten Element und relativ zu dem sechsten Element drehen kann.

Der elektrische Antrieb 26 umfasst außerdem ein sechstes Schaltelement S6, mittels welchem das sechste Element, mithin das zweite Hohlrad 58, drehfest mit dem Gehäuse 28 koppelbar, das heißt verbindbar ist.

Bei der zweiten Ausführungsform sind die Schaltelemente S3 und S4 axial benachbart angeordnet. Dies bedeutet, dass die Schaltelemente S3 und S4 in axialer Richtung des Rotors 34 benachbart angeordnet sind, wobei die Schaltelemente S3 und S4 zu einem Koppelschaltelement KS zusammengefasst sind. Beispielsweise sind die Schaltelemente S3 und S4 einstückig miteinander ausgebildet. Beispielsweise ist das Schaltelement S3 ein erster Teil oder ein erster Bereich des Koppelschaltelements KS, und das Schaltelement S4 ist ein zweiter Teil oder ein zweiter Bereich des Koppelschaltelements KS. Beispielsweise ist das Koppelschaltelement KS zwischen einem vierten Schaltzustand und einem fünften Schaltzustand umschaltbar. In dem vierten Schaltzustand ist beispielsweise das erste Element, mithin das erste Sonnenrad 44, mittels des Koppelschaltelements KS, insbesondere mittels des vierten Schaltelements S4, drehfest mit dem Gehäuse 28 verbunden, und vorzugsweise lässt das Koppelschaltelement KS, insbesondere die Schaltelemente S3 und S4, eine um die Hauptrotationsachse 40 relativ zu dem ersten Element (44) erfolgende Drehung des Rotors 34 zu. In dem fünften Schaltelement ist beispielsweise mittels des Koppelschaltelements KS, insbesondere mittels des dritten Schaltelements S3, das erste Element, mithin das erste Sonnenrad 44, drehfest mit dem Rotor 34 gekoppelt, und beispielsweise lässt das Koppelschaltelement KS, insbesondere die Schaltelemente S3 und S4, eine insbesondere gemeinsame, um die Hauptrotationsachse 40 relativ zu dem Gehäuse 28 erfolgende Drehung des Rotors 34 und des Sonnenrads 44 zu. Es ist denkbar, dass das Koppelschaltelement KS beziehungsweise die Schaltelemente S3 und S4 in einen sechsten Schaltzustand schaltbar sind, welcher als Neutralzustand bezeichnet wird. In dem sechsten Schaltzustand lässt beispielsweise das Koppelschaltelement KS, insbesondere die Schaltelemente S3 und S4, eine um die Hauptrotationsachse 40 relativ zu dem Gehäuse 28 und relativ zu dem Motor 34 erfolgende Drehung des ersten Elements (Sonnenrad 44) zu beziehungsweise umgekehrt.

Der elektrische Antrieb 26 weist außerdem ein siebtes Schaltelement S7 auf, mittels welchem das vierte Element, das heißt das zweite Sonnenrad 54 drehfest mit dem Gehäuse 28 verbindbar ist. Beispielsweise sind das vierte Schaltelement S4, der Elektromotor 30, der erste Planetenradsatz 42, der zweite Planetenradsatz 52, das Eingangszahnrad 66 und das siebte Schaltelement S7 in Richtung der Hauptrotationsachse 40 gesehen und/oder in axialer Richtung des Elektromotors 30 und somit entlang der Hauptrotationsachse 40 betrachtet in der folgenden Reihenfolge nacheinander, das heißt aufeinanderfolgend angeordnet: Das vierte Schaltelement S4 - der Elektromotor 30 - der erste Planetenradsatz 42 - der zweite Planetenradsatz 52 - das Eingangszahnrad 66 - das siebte Schaltelement S7.

Mittels der miteinander verschalteten Planetenradsätze 42 und 52 und mittels der Schaltelemente S1 - S7 können wenigstens oder genau sechs Gänge des elektrischen Antriebs 26 realisiert werden. Um einen ersten der Gänge einzulegen, wird der Rotor 34 mittels des Koppelschaltelements KS, insbesondere mittels des dritten Schaltelements S3, drehfest mit dem Sonnenrad 44 verbunden, eine drehfeste Verbindung des Rotors 34 mit dem Planetenträger 46 unterbleibt, mithin wird der Rotor 34 mittels des Schaltelements S1 nicht drehfest mit dem Planetenträger 46 verbunden, mittels des Schaltelements S2 wird das Hohlrad 48 drehfest mit dem Gehäuse 28 verbunden, mittels des Schaltelements S5 wird der Planetenträger 46 drehfest mit dem Sonnenrad 54 verbunden, insbesondere während das Schaltelement S5 das Hohlrad 58 für eine um die Hauptrotationsachse 40 relativ zu dem Planetenträger 46 und dem Sonnenrad 54 erfolgende Drehung freigibt beziehungsweise umgekehrt, mittels des Schaltelements S6 wird der Planetenträger 56 drehfest mit dem Gehäuse 28 verbunden, und mittels des Schaltelements S7 unterbleibt eine drehfeste Verbindung des Sonnenrads 54 mit dem Gehäuse 28, das heißt mittels des Schaltelements S7 wird das Sonnenrad 54 nicht drehfest mit dem Gehäuse 28 verbunden.

Es ist erkennbar, dass die vorherigen Beschreibungen, dass beispielsweise das jeweilige Schaltelement ein Bauelement für eine um die Hauptrotationsachse 40 relativ zu einem anderen Bauelement erfolgende Drehung freigibt, selbstverständlich auch umgekehrt betrachtet oder gelten kann, sodass darunter auch zu verstehen ist, dass das jeweilige Schaltelement das andere Bauelement für eine um die Hauptrotationsachse 40 relativ zu dem einen Bauelement erfolgende Drehung freigibt.

Um einen zweiten der Gänge einzulegen, wird mittels des Koppelschaltelements KS, insbesondere mittels des vierten Schaltelements S4, das Sonnenrad 44 drehfest mit dem Gehäuse 28 verbunden, insbesondere während das Koppelschaltelement KS eine um die Hauptrotationsachse 40 relativ zu dem Sonnenrad 44 erfolgende Drehung des Rotors 34 freigibt, mittels des Schaltelements S1 wird der Rotor 34 drehfest mit dem Hohlrad 48 verbunden, mittels des Schaltelements S2 wird das Hohlrad 48 nicht drehfest mit dem Gehäuse 28 verbunden, mittels des Schaltelements S5 wird wie beim Einlegen des ersten Gangs der Planetenträger 46 drehfest mit dem Sonnenrad 54 verbunden, während das Schaltelement S5 das Hohlrad 58 für eine um die Hauptrotationsachse 40 relativ zu dem Sonnenrad 44 und relativ zu dem Planetenträger 46 erfolgende Drehung freigibt beziehungsweise umgekehrt, mittels des Schaltelements S6 wird wie beim Einlegen des ersten Gangs das Hohlrad 58 drehfest mit dem Gehäuse 28 verbunden, wie beim Einlegen des ersten Gangs wird mittels des siebten Schaltelements S7 das Sonnenrad 54 nicht drehfest mit dem Gehäuse 28 verbunden, sodass das Schaltelement S7 das Sonnenrad 54 für eine um die Hauptrotationsachse 40 relativ zu dem Gehäuse 28 erfolgende Drehung freigibt. Zum Einlegen eines dritten der Gänge wird wie beim Einlegen des ersten Gangs mittels des Koppelschaltelements KS, insbesondere mittels des dritten Schaltelements S3, der Rotor 34 drehfest mit dem Sonnenrad 44 verbunden, mittels des Schaltelements S1 wird wie beim Einlegen des zweiten Gangs der Rotor 34 drehfest mit dem Hohlrad 48 verbunden, wie beim Einlegen des zweiten Gangs wird mittels des Schaltelements S2 das Hohlrad 48 nicht drehfest mit dem Gehäuse 28 verbunden, sodass das Schaltelement S2 das Hohlrad 48 für eine um die Hauptrotationsachse 40 relativ zu dem Gehäuse 28 erfolgende Drehung freigibt, wie bei dem Einlegen des ersten Gangs und des zweiten Gangs wird mittels des Schaltelements S5 der Planetenträger 46 drehfest mit dem Sonnenrad 54 verbunden, wobei das Schaltelement S5 den Planetenträger 46 und das Sonnenrad 54 für eine um die Hauptrotationsachse 40 relativ zu dem Hohlrad 58 erfolgende Drehung freigibt beziehungsweise umgekehrt, wie bei dem Einlegen des ersten Gangs und des zweiten Gangs wird mittels des Schaltelements S6 das Hohlrad 58 drehfest mit dem Gehäuse 28 verbunden, und wie bei dem Einlegen des ersten und zweiten Gangs wird mittels des Schaltelements S7 das Sonnenrad 54 nicht drehfest mit dem Gehäuse 28 verbunden, sodass das Schaltelement S7 das Sonnenrad 54 für eine um die Hauptrotationsachse 40 relativ zu dem Gehäuse 28 erfolgende Drehung freigibt. Zum Einlegen eines vierten der Gänge wird, wie beim Einlegen des zweiten Gangs, mittels des Koppelschaltelements KS, insbesondere mittels des vierten Schaltelements S4, das Sonnenrad 44 drehfest mit dem Gehäuse 28 verbunden, wie beim Einlegen des zweiten und dritten Gangs wird mittels des Schaltelements S1 der Rotor 34 drehfest mit dem Hohlrad 48 verbunden, wie beim Einlegen des zweiten und dritten Gangs wird mittels des Schaltelements S2 das Hohlrad 48 nicht drehfeste mit dem Gehäuse 28 verbunden, sodass das Schaltelement S2 das Hohlrad 48 für eine um die Hauptrotationsachse 40 relativ zu dem Gehäuse 28 erfolgende Drehung freigibt, mittels des Schaltelements S5 wird der Planetenträger 46 drehfest mit dem Hohlrad 58 verbunden, während das Schaltelement S5 den Planetenträger 46 und das Hohlrad 58 für eine um die Hauptrotationsachse 40 relativ zu dem Sonnenrad 54 erfolgende Drehung freigibt beziehungsweise umgekehrt, mittels des Schaltelements S6 wird das Hohlrad 58 nicht drehfest mit dem Gehäuse 28 verbunden, sodass das Schaltelement S6 das Hohlrad 58 und somit den Planetenträger 46 für eine um die Hauptrotationsachse 40 relativ zu dem Gehäuse 28 erfolgende Drehung freigibt, und mittels des siebten Schaltelements S7 wird das Sonnenrad 54 drehfest mit dem Gehäuse 28 verbunden. Um einen fünften der Gänge einzulegen, wird wie bei dem Einlegen des ersten und dritten Gangs mittels des Koppelschaltelements KS, insbesondere mittels des dritten Schaltelements S3, der Rotor 34 drehfest mit dem Sonnenrad 44 verbunden, und wie bei dem Einlegen des zweiten und dritten Gangs wird mittels des Schaltelements S1 der Rotor 34 drehfeste mit dem Hohlrad 48 verbunden, mittels des Schaltelements S2 wird das Hohlrad 48 nicht drehfest mit dem Gehäuse 28 verbunden, sodass das Schaltelement S2 das Hohlrad 48 und somit den Rotor 34 und das Sonnenrad 44 für eine um die Hauptrotationsachse 40 relativ zu dem Gehäuse 28 erfolgende Drehung freigibt, mittels des Schaltelements S5 wird wie beim Einlegen des vierten Gangs der Planetenträger 46 drehfest mit dem Hohlrad 58 verbunden, während das Schaltelement S5 das Hohlrad 58 und den Planetenträger 46 für eine um die Hauptrotationsachse 40 relativ zu dem Sonnenrad 44 erfolgende Drehung freigibt beziehungsweise umgekehrt, mittels des Schaltelements S6 wird wie beim Einlegen des vierten Gangs das Hohlrad 58 nicht drehfest mit dem Gehäuse 28 verbunden, sodass das Schaltelement S6 das Hohlrad 48 und somit den Planetenträger 46 für eine um die Hauptrotationsachse 40 relativ zu dem Gehäuse 28 erfolgende Drehung freigibt, und wie beim Einlegen des vierten Gangs wird mittels des siebten Schaltelements S7 das Sonnenrad 54 drehfest mit dem Gehäuse 28 verbunden. Zum Einlegen des sechsten Gangs wird wie bei dem Einlegen des ersten, dritten und fünften Gangs mittels des Koppelschaltelements KS, insbesondere mittels des dritten Schaltelements S3, der Rotor 34 drehfest mit dem Sonnenrad 44 verbunden, wie bei dem Einlegen des zweiten, dritten, vierten und fünften Gangs wird mittels des Schaltelements S1 der Rotor 34 drehfest mit dem Hohlrad 48 verbunden, mittels des Schaltelements S2 wird das Hohlrad 48 nicht drehfest mit dem Gehäuse 28 verbunden, sodass das Schaltelement S2 das Hohlrad 48 und somit den Rotor 34 und das Sonnenrad 44 für eine um die Hauptrotationsachse 40 relativ zu dem Gehäuse 28 erfolgende Drehung freigibt, mittels des Schaltelements S5 wird das Planetenträger 46 gleichzeitig drehfest mit dem Sonnenrad 54 und drehfest mit dem Hohlrad 58 verbunden, sodass der Planetenträger 46, das Sonnenrad 54 und das Hohlrad 58 mittels des fünften Schaltelements S5 gleichzeitig drehfest miteinander verbunden sind, mittels des Schaltelements S6 wird das Hohlrad 58 drehfest mit dem Gehäuse 28 verbunden oder aber mittels des Schaltelements S6 wird das Hohlrad 58 nicht drehfest mit dem Gehäuse 28 verbunden, sodass beispielsweise das Schaltelement S6 das Hohlrad 58 und somit das Sonnenrad 54 und den Planetenträger 46 für eine um die Hauptrotationsachse 40 relativ zu dem Gehäuse 28 erfolgende Drehung freigibt, und mittels des siebten Schaltelements S7 wird das Sonnenrad 54 nicht drehfest mit dem Gehäuse 28 verbunden, sodass beispielsweise das Schaltelement S7 das Sonnenrad 54 und somit vorzugsweise auch den Planetenträger 46 und das Hohlrad 58 für eine um die Hauptrotationsachse 40 relativ zu dem Gehäuse 28 erfolgende Drehung freigibt.

Die erste Ausführungsform des elektrischen Antriebs 26 eignet sich beispielsweise für besonders leichte, das heißt gewichtsgünstige bis mittelschwere Fahrzeuge.

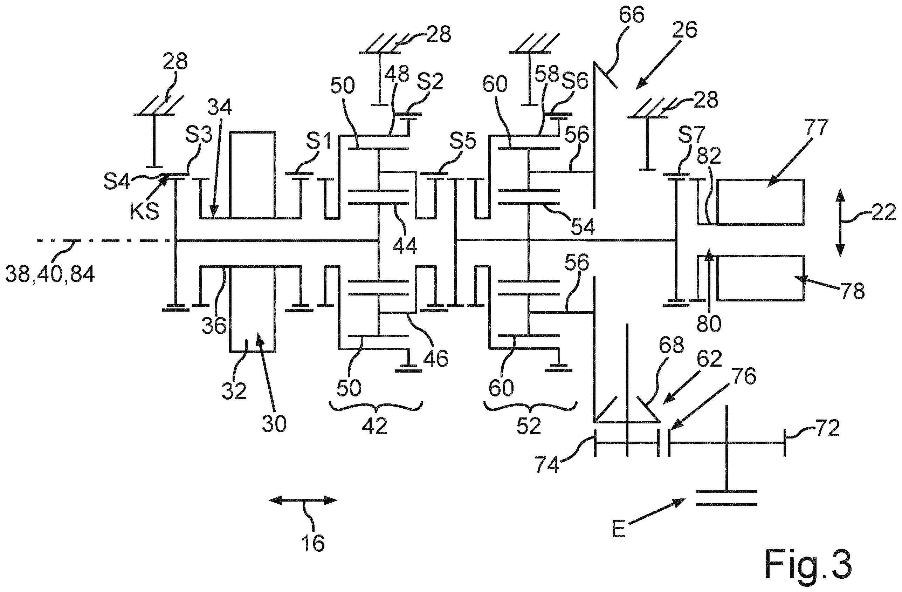

Fig. 3 zeigt eine zweite Ausführungsform des elektrischen Antriebs 26. Die zweite Ausführungsform eignet sich besonders vorteilhaft für schwere Langstreckenfahrzeuge. Bei der zweiten Ausführungsform umfasst der elektrische Antrieb 26 einen koaxial zudem Elektromotor 30 angeordneten, zweiten Elektromotor 77, welcher einen zweiten Stator 78 und einen zweiten Rotor 80, insbesondere mit eine zweiten Rotorwelle 82, aufweist. Insbesondere ist es denkbar, dass der jeweilige Stator 32 beziehungsweise 78, insbesondere drehfest, an dem Gehäuse 28 festgelegt ist. Der Rotor 80 ist um eine zweite Rotorachse 84 relativ zu dem zweiten Stator 78 drehbar. Da die Elektromotoren 30 und 77 koaxial zueinander angeordnet sind, fällt die zweite Rotorachse 84 mit der ersten Rotorachse 38 und somit mit der Hauptrotationsachse 40 zusammen, sodass der Elektromotor 77 beziehungsweise sein Rotor 80 auch koaxial zu den Planetenradsätzen 42 und 52 und somit koaxial zu deren Elementen angeordnet sind. Über den Rotor 80 kann der zweite Elektromotor 77 zweite Drehmomente als zweite Antriebsmomente bereitstellen, mittels welchen die Fahrzeugräder 24, insbesondere rein, elektrisch angetrieben werden können. Der zweite Rotor 80 ist drehfest mit einem der Elemente des zweiten Planetenradsatzes 52 gekoppelt oder koppelbar. Beispielsweise kann ein weiteres Schaltelement vorgesehen sein, mittels welchem der Rotor 80 mit dem einen Element des Planetenradsatzes 52 drehfest koppelbar ist. Bei der zweiten Ausführungsform, die in Fig. 3 gezeigt ist, ist das zweite Schaltelement durch das Schaltelement S7 gebildet beziehungsweise einstückig mit dem Schaltelement S7 ausgebildet. Mit anderen Worten wird bei der in Fig. 3 gezeigten zweiten Ausführungsform das Schaltelement S7 verwendet, um den Rotor 80 wahlweise beziehungsweise bedarfsgerecht mit dem einen Element des zweiten Planetenradsatzes 52 drehfest zu verbinden. Bei der in Fig. 3 gezeigten zweiten Ausführungsform handelt es sich bei dem einen Element des zweiten Planetenradsatzes 52 um das zweite Sonnenrad 54, sodass es bei der zweiten Ausführungsform vorgesehen ist, dass der Rotor 80, insbesondere mittels des weiteren Schaltelements beziehungsweise mittels des siebten Schaltelements S7, drehfest mit dem Sonnenrad 54 verbindbar ist. Beispielsweise kann das Schaltelement S7 zwischen drei Zuständen umgeschaltet werden. In einem ersten der Zustände gibt das Schaltelement S7 sowohl das Sonnenrad 54 als auch den Rotor 80 für eine um die Hauptrotationsachse 40 relativ zu dem Gehäuse 28 und relativ zueinander erfolgende Drehung frei, sodass beispielsweise in dem ersten Zustand der Rotor 80 weder mit dem Sonnenrad 54 noch mit dem Gehäuse 28 drehfest verbunden ist. In einem zweiten der Zustände ist beispielsweise mittels des Schaltelements S7 das Sonnenrad 54 drehfest mit dem Gehäuse 28 verbunden, während beispielsweise das Schaltelement S7 den Rotor 80 für eine um die Hauptrotationsachse 40 relativ zu dem Gehäuse 28 und relativ zu dem Gehäuse 28 erfolgende Drehung freigibt. In einem dritten der Zustände ist beispielsweise mittels des Schaltelements S7 der Rotor 80 drehfest mit dem Sonnenrad 54 verbunden, während das Schaltelement S7 den Rotor 80 und das Sonnenrad 54 für eine um die Hauptrotationsachse 40 relativ zu dem Gehäuse 28 erfolgende Drehung freigibt. Somit ist es bei der zweiten Ausführungsform vorgesehen, dass der Rotor 80 mit dem vierten Element drehfest gekoppelt oder koppelbar ist.

Bei der zweiten Ausführungsform sind der erste Elektromotor 30, der erste Planetenradsatz 42, der zweite Planetenradsatz 52, das Eingangszahnrad 66 und der zweite Elektromotor 77 in Richtung der antreibbaren, zweiten Achse 20 (Hauptantriebsachse) und/oder in axialer Richtung des Rotors 34, dessen axiale Richtung mit der axialen Richtung des Rotors 80 zusammenfällt, in der folgenden Reihenfolge nacheinander, das heißt aufeinanderfolgend angeordnet: Der erste Elektromotor 30 - der erste Planetenradsatz 42 - der zweite Planetenradsatz 52 - das Eingangszahnrad 66 - der zweite Elektromotor 77.

Insbesondere ist es bei der zweiten Ausführungsform vorgesehen, dass die Planetenradsätze 42 und 52 in axialer Richtung des jeweiligen Elektromotors 30 beziehungsweise 77 zwischen den Elektromotoren 30 und 77 angeordnet sind, sodass der Elektromotor 77 in axialer Richtung des jeweiligen Elektromotors 30 beziehungsweise 77 auf einer von dem Elektromotor 30 abgewandten Seite des Planetenradsatzes 52 angeordnet ist, und der Elektromotor 30.

Eine weitere, in den Fig. nicht gezeigte Ausführungsform des elektrischen Antriebs 26 eignet sich beispielsweise für schwere Baustellenfahrzeuge. Bei dieser in den Fig. nicht gezeigten, weiteren Ausführungsform sind beispielsweise die Elektromotoren 30 und 77 auf einer gemeinsamen, in axialer Richtung des jeweiligen Elektromotors 30 beziehungsweise 77 von dem zweiten Planetenradsatz 52 abgewandten und den Elektromotoren 30 und 77 zugewandten Seite des ersten Planetenradsatzes 42 angeordnet. Dabei ist beispielsweise ein Koppelelement denkbar, mittels welchem die Rotoren 34 und 80 drehfest miteinander verbindbar sind. Dabei ist es auch beispielsweise denkbar, dass der Rotor 80 mittels des Schaltelements S1 drehfest mit dem Hohlrad 48 verbindbar ist, wobei beispielsweise der zweite Elektromotor 77 in axialer Richtung des jeweiligen Elektromotors 30 beziehungsweise 77 zwischen dem Elektromotor 30 und dem ersten Planetenradsatz 42 angeordnet ist. Dabei ist beispielsweise das Koppelelement in axialer Richtung des jeweiligen Elektromotors 30 beziehungsweise 77 zwischen den Elektromotoren 30 und 77 angeordnet.

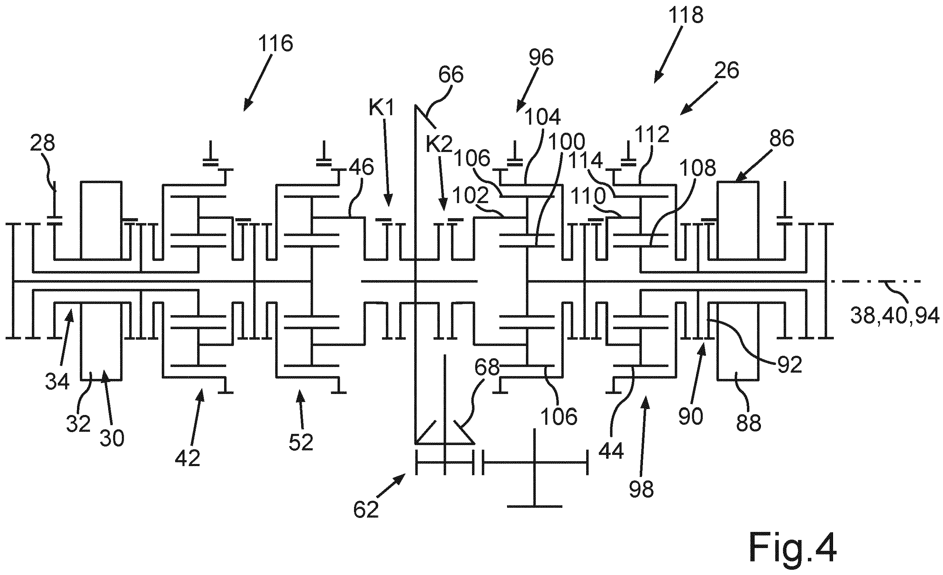

Schließlich zeigt Fig. 4 eine dritte Ausführungsform des elektrischen Antriebs 26. Bei der dritten Ausführungsform ist ein weiterer Elektromotor 86 mit einem weiteren Stator 88 und einem weiteren Rotor 90 vorgesehen, welcher beispielsweise eine weitere Rotorwelle 92 aufweist. Insbesondere ist der weitere Rotor 90 um eine weitere Rotorachse 94 relativ zu dem weiteren Stator 88 drehbar. Die Elektromotoren 86 und 30 sind koaxial zueinander angeordnet, sodass die Rotorachse 94 mit der Hauptrotationsachse 40 zusammenfällt. Somit sind die Rotoren 34 und 90 koaxial zueinander angeordnet, und der Elektromotor 86 beziehungsweise sein Rotor 90 ist koaxial zu den Planetenradsätzen 42 und 52 angeordnet.

Bei der dritten Ausführungsform ist ein dritter Planetenradsatz 96 mit einem siebten Element, achten Element und neunten Element vorgesehen, und es ist ein vierter Planetenradsatz 98 mit einem zehnten Element, elften Element und zwölften Element vorgesehen. Bei der dritten Ausführungsform ist das siebte Element ein drittes Sonnenrad 100, das achte Element ein dritter Planetenträger 102, welcher auch als dritter Steg bezeichnet wird und das neunte Element ein drittes Hohlrad 104. Der dritte Planetenradsatz 96 weist wenigstens ein oder mehrere, dritte Planetenräder 106 auf, welche drehbar an dem Planetenträger 102 gehalten sind und einerseits, insbesondere direkt, mit dem Hohlrad 104 und andererseits, insbesondere direkt, mit dem Sonnenrad 100 kämmen, welches auch als dritte Sonne bezeichnet wird. Demzufolge wird der dritte Planetenträger 102 auch als dritter Steg bezeichnet. Das zehnte Element ist ein viertes Sonnenrad 108, welches auch als vierte Sonne bezeichnet wird, das elfte Element ist ein vierter Planetenträger 110, welcher als auch vierter Steg bezeichnet wird und das zwölfte Element ist ein Hohlrad 112. Der vierte Planetenradsatz 98 weist wenigstens ein oder mehrere, vierte Planetenräder 114 auf, welche drehbar an dem vierten Steg gehalten sind und einerseits, insbesondere direkt, mit dem vierten Hohlrad 112 und andererseits, insbesondere direkt, mit der vierten Sonne kämmen beziehungsweise in Eingriff stehen. Es ist erkennbar, dass die Planetenradsätze 96 und 98 koaxial zueinander angeordnet sind, wobei der Planetenradsatz 96 und der Planetenradsatz 98 auch koaxial zu den Elektromotoren 30 und 86 beziehungsweise koaxial zu deren Rotoren 34 und 90 angeordnet sind. Der zweite Rotor 90 ist drehfeste mit dem siebten Element gekoppelt oder koppelbar, wobei das achte Element mit dem zehnten Element gekoppelt oder koppelbar ist, und wobei das elfte Element drehfest mit dem Eingangszahnrad 66 des Winkeltriebs 62 gekoppelt oder koppelbar ist. Im Grunde ist die dritte Ausführungsform die erst Ausführungsform in doppelter Ausführung, sodass beispielsweise die dritte Ausführung dadurch aus der ersten Ausführungsform erzeugt werden kann, dass die erste Ausführungsform beziehungsweise die bezogen auf die Bildebene von Fig. 2 links von dem Eingangszahnrad 66 angeordneten Bauteile an einer Spiegelebene gespiegelt werden, um dadurch die bezogen auf die Bildebene von Fig. 4 rechts neben dem Eingangszahnrad 66 angeordneten Bauteile zu schaffen, wobei die Spiegelebene senkrecht zur Hauptrotationsachse 40 verläuft, und wobei das beispielsweise als Tellerrad ausgebildete Eingangszahnrad 66 des beispielsweise auch als Kegeltrieb ausgebildeten Winkeltriebs 62 in der Spiegelebene verläuft. Somit ist beispielsweise ein die Planetenradsätze 42 und 52 sowie beispielsweise dem Elektromotor 30 umfassendes, erstes Getriebe 116 vorgesehen, und es ist ein die Planetenradsätze 96 und 98 und beispielsweise den Elektromotor 86 umfassendes, zweites Getriebe 118 vorgesehen, welches bezogen auf die Spiegelebene ein Spiegelbild des Getriebes 116 ist oder sein kann. Dabei ist es denkbar, dass sich die Übersetzungsreihe des linken Getriebes 116 von der des rechten Getriebes 118 unterscheidet. Ferner ist es denkbar, dass sich die Elektromotoren 30 und 86 in ihren Größen und/oder Leistungen voneinander unterscheiden, sodass beispielsweise der Elektromotor 30 größer als der Elektromotor 86 ist oder umgekehrt. Die vierte Ausführungsform hat insbesondere die folgenden Vorteile:
- zugkraftunterbrechungsfreies Schalten, die Getriebeschaltpunkte links und rechts sind unterschiedlich aufgrund der Übersetzungsreihe
- Aufgrund der unterschiedlichen Übersetzungsreihen sind auch unterschiedliche Elektromotoren 30 und 86 möglich. Hierbei wird besonders vorteilhaft auf der einen Seite ein großer Elektromotor installiert, welcher eine große Leistung hat und unter Bewältigung von Anfahrvorgängen und zum Befahren von Steigungen verwendet werden kann. Auf der anderen Seite wird vorteilhaft ein kleiner Elektromotor beispielsweise mit einer Leistung von 80 bis 120 Kilowatt verwendet für ein effizienteres Fahren auf Langstrecke. Ziel hierbei ist, sobald das Kraftfahrzeug 10 auf der Autobahn ist, benötigt es um die 100 Kilowatt Leistung, und diese bekommt das Kraftfahrzeug 10 von dem kleineren Elektromotor. Vorteilhaft werden auch bei der zweiten Ausführungsform zwei unterschiedliche Elektromotoren mit den hier genannten Merkmalen verwendet.

Der Winkeltrieb 62 kann abgekoppelt werden, insbesondere über eine Kupplung K1 beziehungsweise K2. Es ist erkennbar, dass mittels der Kupplung K1 eines der Elemente des Planetenradsatzes 52, insbesondere der Planetenträger 46, drehfest mit dem Eingangszahnrad 66 verbindbar ist, und mittels der Kupplung K2 ist das Eingangszahnrad 66 mit einem der Elemente des Planetenradsatzes 96, insbesondere mit dem Planetenträger 102, drehfest koppelbar. Die jeweilige Kupplung K1 beziehungsweise K2 kann eine formschlüssige Kupplung, insbesondere eine Klauenkupplung, sein. Nur bei Bedarf, Steigung, beziehungsweise Rekuperation (Bremsen) wird der entsprechend andere Drehmomentpfad beziehungsweise der andere Elektromotor zugeschaltet. Hierdurch kann bei gleicher Batteriekapazität eine besonders große Reichweite dargestellt werden.

Insbesondere im Hinblick auf die erste Ausführungsform und gegebenenfalls die zweite Ausführungsform sowie die weitere, in den Fig. nicht gezeigte Ausführungsform sei festzuhalten, dass durch andere Planetenradsätze, Winkeltrieb- und Stirnradübersetzungen zumindest nahezu alle Übersetzungsvarianten möglich sind. Diese Einheit stellt eine Hochvolt-Leistungseinheit dar, vergleichbar mit einem Leistungspack bei konventionellen Antrieben. Der elektrische Antrieb 26 kann ohne Änderungen heutige Achs- und Rahmenkonstruktionen, mit Hilfe der Gelenkwelle 64 an diese angeflanscht werden, um beispielsweise aus einem herkömmlichen Fahrzeug ausschließlich mit Verbrennungsmotor ein Elektro- oder Hybridfahrzeug darzustellen. Während heute unterschiedliche, elektrische Achsen nötig sind für leichte und schwere Nutzfahrzeuge oder auch Busse, können durch Verwendung des elektrischen Antriebs 26 heutige, fahrzeugspezifische Achsen beibehalten werden, und es kann der gleiche elektrische Antrieb 26 als Hochvolt-Leistungseinheit insbesondere mit Anpassung der Kegel-/ Stirnradübersetzung verbaut werden. Der elektrische Antrieb 26 ist im Vergleich zu einer elektrischen Achse klein, besser handhabbar im Hinblick auf die Produktion, Lagerung und Logistik und rahmenfest. Dies ist besonders gut für elektrische Komponenten, da übermäßige Vibrationen dieser Komponenten vermieden werden können. Der elektrische Antrieb 26 bietet auch die Möglichkeit, Fahrzeuge als P3 oder P4-Hybride darzustellen. Aus Kostensicht kann die Anzahl an Schaltelementen besonders gering gehalten werden, beziehungsweise die Anzahl der Schaltelemente kann gegenüber den gezeigten reduziert werden, wodurch Kosten, Gewicht eingespart werden können, wobei auch dann eine geringere Gangzahl darstellbar ist.

### Bezugszeichenliste

- 10: Kraftfahrzeug
- 12: erste Achse
- 14: erstes Fahrzeugrad
- 16: Doppelpfeil
- 18: Rahmen
- 20: zweite Achse
- 22: Doppelpfeil
- 24: zweites Fahrzeugrad
- 26: elektrischer Antrieb
- 27: Pfeil
- 28: Gehäuse
- 29: Traktionsbatterie
- 30: Elektromotor
- 32: Stator
- 34: Rotor
- 36: Rotorwelle
- 38: Rotorachse
- 40: Hauptrotationsachse
- 42: erster Planetenradsatz
- 44: Sonnenrad
- 46: Planetenträger
- 48: Hohlrad
- 50: Planetenrad
- 52: zweiter Planetenradsatz
- 54: Sonnenrad
- 56: Planetenträger
- 58: Hohlrad
- 60: Planetenrad
- 62: Winkeltrieb
- 64: Gelenkwelle
- 66: Eingangszahnrad
- 68: Ausgangszahnrad
- 70: Achsgetriebe
- 72: Stirnradstufe
- 74: erstes Zahnrad
- 76: zweites Zahnrad
- 77: zweiter Elektromotor
- 78: zweiter Stator
- 80: zweiter Rotor
- 82: zweite Rotorwelle
- 84: zweite Rotorachse
- 86: weiterer Elektromotor
- 88: weiterer Stator
- 90: weiterer Rotor
- 92: weitere Rotorwelle
- 94: weitere Rotorachse
- 96: dritter Planetenradsatz
- 98: vierter Planetenradsatz
- 100: Sonnenrad
- 102: Planetenträger
- 104: Hohlrad
- 106: Planetenrad
- 108: Sonnenrad
- 110: Planetenträger
- 112: Hohlrad
- 114: Planetenrad
- 116: erstes Getriebe
- 118: zweites Getriebe
- A: Ausgangsseite
- E: Eingangsseite
- K1, K2: Kupplung
- KS: Koppelschaltelement
- S1-S7: Schaltelement
- SE1-3: Seite

## Patentansprüche

1. Kraftfahrzeug(10), mit einer lenkbaren, ersten Achse (12), mit einer antreibbaren, zweiten Achse (20), mit einem elektrischen Antrieb (26) zum Antreiben der zweiten Achse (20), und mit einer Traktionsbatterie (28), mittels welcher der elektrische Antrieb (26) mit in der Traktionsbatterie (28) gespeicherter, elektrischer Energie versorgbar ist, wobei der elektrische Antrieb (26) aufweist:
- ein Gehäuse (28),
- einen Elektromotor (30), welcher einen Stator (32) und einen um eine Rotorachse (38) relativ zu dem Stator (32) und relativ zu dem Gehäuse (28) drehbaren Rotor (34) aufweist,
- einen koaxial zu der Rotorachse (38) angeordneten ersten Planetenradsatz (42), welcher ein erstes Element, ein zweites Element und ein drittes Element aufweist,
- einen koaxial zu der Rotorachse (38) angeordneten zweiten Planetenradsatz (52), welcher ein viertes Element, ein fünftes Element und ein sechstes Element aufweist, wobei in axialer Richtung des Rotors (34) der Elektromotor (30), der erste Planetenradsatz (42) und der zweite Planetenradsatz (52) in der folgenden Reihenfolge nacheinander angeordnet sind: der Elektromotor (30) - der erste Planetenradsatz (42) - der zweite Planetenradsatz (52), und
- das Gehäuse (28) starr an einen Rahmen (18) des Kraftfahrzeuges (10) angebunden ist,
- der elektrische Antrieb (26) einen Winkeltrieb (62) aufweist,
- das Kraftfahrzeug (10) eine Gelenkwelle (64) aufweist,
- eines der Elemente des zweiten Planetenradsatzes (52) drehfest mit einem Eingangszahnrad (66) des Winkeltriebes (62) gekoppelt oder koppelbar ist, und
- eine Ausgangsseite (A) der Gelenkwelle (64) mit einem Achsgetriebe (70) der zweiten Achse (20) gekoppelt oder koppelbar ist, **dadurch gekennzeichnet, dass**:
- die Rotorachse (38) rechtwinklig zur Fahrzeuglängsrichtung (22) angeordnet ist,
- in Fahrzeuglängsrichtung (22) die erste Achse (12), die Traktionsbatterie (28), die zweite Achse (20) und der elektrische Antrieb (26) in der folgenden Reihenfolge nacheinander angeordnet sind: die erste Achse (12) - die Traktionsbatterie (28) - die zweite Achse (20) - der elektrische Antrieb (26),
- ein Ausgangszahnrad (68) des Winkeltriebes (62) mit einer Eingangsseite (E) der Gelenkwelle (64) gekoppelt oder koppelbar ist.

2. Kraftfahrzeug (10) nach Anspruch 1,
**dadurch gekennzeichnet, dass**
das Ausgangszahnrad (68) des Winkeltriebes (62) mit einem ersten Zahnrad (74) einer Stirnradstufe (72) drehfest gekoppelt ist.

3. Kraftfahrzeug (10) nach Anspruch 2,
ein zweites Zahnrad (76) der Stirnradstufe (72) drehfest mit der Eingangsseite (E) der Gelenkwelle (64) gekoppelt ist.

4. Kraftfahrzeug (10) nach einem der vorhergehenden Ansprüche,
**dadurch gekennzeichnet, dass**
der elektrische Antrieb (26) aufweist:
- ein erstes Schaltelement (S1), mittels welchem das dritte Element drehfest mit dem Rotor koppelbar ist,
- ein zweites Schaltelement (S2), mittels welchem das dritte Element drehfest mit dem Gehäuse (28) koppelbar ist,
- ein drittes Schaltelement (S3), mittels welchem das erste Element drehfest mit dem Rotor (34) koppelbar ist,
- ein viertes Schaltelement (S4), mittels welchem das erste Element drehfest mit dem Gehäuse (28) koppelbar ist, wobei das vierte Schaltelement (S4) auf einer in axialer Richtung des Rotors (34) von dem ersten Planetenradsatz (42) abgewandten Seite (S3) des Elektromotors (30) angeordnet ist, und
- ein fünftes Schaltelement (S5), mittels welchem das zweite Element drehfest mit dem vierten Element koppelbar ist, wobei das fünfte Element drehfest mit dem Eingangszahnrad (66) des Winkeltriebes (62) gekoppelt oder koppelbar ist.

5. Kraftfahrzeug (10) nach Anspruch 4,
**dadurch gekennzeichnet, dass**
das fünfte Schaltelement (S5) dazu ausgebildet ist, das zweite Element drehfest mit dem vierten Element und drehfest mit dem sechsten Element zu koppeln.

6. Kraftfahrzeug (10) nach Anspruch 4 oder 5,
**gekennzeichnet durch**
ein sechstes Schaltelement (S6), mittels welchem das sechste Element drehfest mit dem Gehäuse (28) koppelbar ist.

7. Kraftfahrzeug (10) nach einem der Ansprüche 4 bis 6,
**dadurch gekennzeichnet, dass**
das dritte Schaltelement (S3) und das vierte Schaltelement (S4) axial benachbart angeordnet und zu einem Koppelschaltelement (KS) mit zumindest zwei Schaltstellungen zusammengefasst sind.

8. Kraftfahrzeug (10) nach einem der Ansprüche 4 bis 7,
**gekennzeichnet durch**
ein siebtes Schaltelement (S7), mittels welchem das vierte Element drehfest mit dem Gehäuse (28) koppelbar ist.

9. Kraftfahrzeug (10) nach Anspruch 8,
**dadurch gekennzeichnet, dass**
das vierte Schaltelement (S4), der Elektromotor (30), der erste Planetenradsatz (42), der zweite Planetenradsatz (52), das Eingangszahnrad (66) und das siebte Schaltelement (S7) in Richtung der antreibbaren, zweiten Achse (20) gesehen und/oder in axialer Richtung des Rotors (34) in der folgenden Reihenfolge nacheinander angeordnet sind: das vierte Schaltelement (S4) - der Elektromotor (30) - der erste Planetenradsatz (42) - der zweite Planetenradsatz (52) - das Eingangszahnrad (66) - das siebte Schaltelement (S7).

10. Kraftfahrzeug (10) nach einem der vorhergehenden Ansprüche,
**gekennzeichnet durch**
einen koaxial zu dem Elektromotor (30) angeordneten, zweiten Elektromotor (77), welcher einen zweiten Stator (78) und einen relativ zu dem zweiten Stator (78) drehbaren, zweiten Rotor (80) aufweist, wobei der zweite Rotor (80) drehfest mit einem der Elemente des zweiten Planetenradsatzes (52) gekoppelt oder koppelbar ist.

11. Kraftfahrzeug (10) nach Anspruch 10,
**dadurch gekennzeichnet, dass**
der zweite Rotor (80) drehfest mit dem vierten Element gekoppelt oder koppelbar ist.

12. Kraftfahrzeug (10) nach Anspruch 10 oder 11,
**dadurch gekennzeichnet, dass**
der erste Elektromotor (30), der erste Planetenradsatz (42), der zweite Planetenradsatz (52), das Eingangszahnrad (66) und der zweite Elektromotor (77) in Richtung der antreibbaren, zweiten Achse (20) gesehen und/oder in axialer Richtung des ersten Elektromotors (30) in der folgenden Reihenfolge nacheinander angeordnet sind: der erste Elektromotor (30) - der erste Planetenradsatz (42) - der zweite Planetenradsatz (52) - das Eingangszahnrad (66) - der zweite Elektromotor (77).

13. Kraftfahrzeug (10) nach einem der Ansprüche 1 bis 9,
**gekennzeichnet durch**:
- einen weiteren Elektromotor (86) mit einem weiteren Stator (88) und einem weiteren Rotor (90), welcher koaxial zu dem ersten Rotor (34) und den Planetenradsätzen (42, 52) angeordnet ist,
- einen dritten Planetenradsatz (96) mit einem siebten Element, einem achten Element und einem neunten Element, welche koaxial zu den Rotoren (34, 90), zu dem ersten Planetenradsatz (42) und zu dem zweiten Planetenradsatz (52) angeordnet sind, und
- einen vierten Planetenradsatz (98) mit einem zehnten Element, einem elften Element und einem zwölften Element, welche koaxial zu den Rotoren (34, 90), zu dem ersten Planetenradsatz (42), zu dem zweiten Planetenradsatz (52) und zu dem dritten Planetenradsatz (96) angeordnet sind, wobei der zweite Rotor (90) drehfest mit dem siebten Element gekoppelt oder koppelbar ist, wobei das achte Element mit dem zehnten Element gekoppelt oder koppelbar ist, und wobei das elfte Element drehfest mit dem Eingangszahnrad (66) des Winkeltriebes (62) gekoppelt oder koppelbar ist.

14. Kraftfahrzeug (10) nach Anspruch 13,
**dadurch gekennzeichnet, dass**
in der Richtung der antreibbaren, zweiten Achse (20) gesehen und/oder in axialer Richtung des ersten Rotors (34) der erste Elektromotor (30), der erste Planetenradsatz (42), der zweite Planetenradsatz (52), das Eingangszahnrad (66) des Winkeltriebes (62), der vierte Planetenradsatz (98), der dritte Planetenradsatz (96) und der weitere Elektromotor (86) in der folgenden Reihenfolge nacheinander angeordnet sind: der erste Elektromotor (30) - der erste Planetenradsatz (42) - der zweite Planetenradsatz (52) - das Eingangszahnrad (66) des Winkeltriebes (62) - der vierte Planetenradsatz (98) - der dritte Planetenradsatz (96) - der weitere Elektromotor (86).

## Claims

1. A motor vehicle (10), having a steerable first axle (12), having a driveable second axle (20), having an electric drive system (26) for driving the second axle (20), and having a traction battery (28), by means of which the electric drive system (26) can be supplied with electrical energy stored in the traction battery, the electric drive system (26) comprising:
- a housing (28),
- an electric motor (30), comprising a stator (32) and a rotor (34) rotatable relative to the stator (32) and relative to the housing (28) about a rotor axis (38),
- a first planetary wheel set (42), arranged coaxially to the rotor axis (38), comprising a first element, a second element, and a third element,
- a second planetary wheel set (52), arranged coaxially to the rotor axis (38), comprising a fourth element, a fifth element, and a sixth element, wherein, in the axial direction of the rotor (34), the electric motor (30), the first planetary wheel set (42), and the second planetary wheel set (52) are arranged in sequence in the following order: the electric motor (30) - the first planetary wheel set (42) - the second planetary wheel set (52), and wherein
- the housing (28) is rigidly connected to a frame (18) of the motor vehicle (10),
- the electric drive system (26) comprises an angle drive (62),
- the motor vehicle (10) comprises a propeller shaft (64),
- one of the elements of the second planetary wheel set (52) is or can be non-rotatably coupled to an input gear wheel (66) of the angle drive (62), and
- an output side (A) of the propeller shaft (64) is or can be coupled to an axle gear (70) of the second axle (20), **characterised in that**:
- the rotor axis (38) is arranged perpendicular to the vehicle longitudinal direction (22),
- in the vehicle longitudinal direction (22), the first axle (12), the traction battery (28), the second axle (20), and the electric drive system (26) are arranged in sequence in the following order: the first axle (12) - the traction battery (28) - the second axle (20) - the electric drive system (26),
- an output gear wheel (68) of the angle drive (62) is or can be coupled to an input side (E) of the propeller shaft (64).

2. The vehicle (10) according to claim 1,
**characterised in that**
the output gear wheel (68) of the angle drive (62) is non-rotatably coupled to a first gear wheel (74) of a spur wheel stage (72).

3. The vehicle (10) according to claim 2,
a second gear wheel (76) of the spur wheel stage (72) is non-rotatably coupled to the input side (E) of the propeller shaft (64).

4. The vehicle (10) according to one of the preceding claims,
**characterised in that**
the electric drive system (26) comprises:
- a first switching element (S1), by means of which the third element can be non-rotatably coupled to the rotor,
- a second switching element (S1), by means of which the third element can be non-rotatably coupled to the housing (28),
- a third switching element (S1), by means of which the first element can be non-rotatably coupled to the rotor (34),
- a fourth switching element (S4), by means of which the first element can be non-rotatably coupled to the housing (28), wherein the fourth switching element (S4) is arranged on a side (S3) of the electric motor (30) facing away from the first planetary wheel set (42) in the axial direction, and
- a fifth switching element (S5), by means of which the second element can be non-rotatably coupled to the fourth element, wherein the fifth element is or can be non-rotatably coupled to the input gear wheel (66) of the angle drive (62).

5. The vehicle (10) according to claim 4,
**characterised in that**
the fifth switching element (S5) is configured to couple the second element non-rotatably to the fourth element and non-rotatably to the sixth element.

6. The vehicle (10) according to claim 4 or 5,
**characterised by**
a sixth switching element (S6), by means of which the sixth element can be non-rotatably coupled to the housing (28),

7. The vehicle (10) according to one of claims 4 to 6,
**characterised in that**
the third switching element (S3) and the fourth switching element (S4) are arranged axially adjacent and are combined into a coupling switching element (KS) having at least two switching positions.

8. The vehicle (10) according to one of claims 4 to 7,
**characterised by**
a seventh switching element (S7), by means of which the fourth element can be non-rotatably coupled to the housing (28).

9. The vehicle (10) according to claim 8,
**characterised in that**
when viewed in the direction of the driveable second axle (20) and/or in the axial direction of the rotor (34), the fourth switching element (S4), the electric motor (30), the first planetary wheel set (42), the second planetary wheel set (52), the input gear wheel (66), and the seventh switching element (S7) are arranged in sequence in the following order: the fourth switching element (S4) - the electric motor (30) - the first planetary wheel set (42) - the second planetary wheel set (52) - the input gear wheel (66) - the seventh switching element (S7).

10. The vehicle (10) according to one of the preceding claims,
**characterised by**
a second electric motor (77) arranged coaxially to the electric motor (30), comprising a second stator (78) and a second rotor (80) rotatable relative to the second stator (78), wherein the second rotor (80) is or can be non-rotatably coupled to one of the elements of the second planetary wheel set (52).

11. The vehicle (10) according to claim 10, **characterised in that** the second rotor (80) is or can be non-rotatably coupled to the fourth element.

12. The vehicle (10) according to claim 10 or 11, **characterised in that** when viewed in the direction of the driveable second axle (20) and/or in the axial direction of the first electric motor (30), the first electric motor (30), the first planetary wheel set (42), the second planetary wheel set (52), the input gear wheel (66), and the second electric motor (77) are arranged in sequence in the following order: the first electric motor (30) - the first planetary wheel set (42) - the second planetary wheel set (52) - the input gear wheel (66) - the second electric motor (77).

13. The vehicle (10) according to one of claims 1 to 9, **characterized by**:
- a further electric motor (86) having a further stator (88) and a further rotor (90), which is arranged coaxially to the first rotor (34) and the planetary wheel sets (42, 52),
- a third planetary wheel set (96) having a seventh element, an eighth element, and a ninth element, which are arranged coaxially to the rotors (34, 90), to the first planetary wheel set (42), and to the second planetary wheel set (52), and
- a fourth planetary wheel set (98) having a tenth element, an eleventh element, and a twelfth element, which are arranged coaxially to the rotors (34, 90), to the first planetary wheel set (42), to the second planetary wheel set (52), and to the third planetary wheel set (96), wherein the second rotor (90) is or can be non-rotatably coupled to the seventh element, wherein the eighth element is or can be non-rotatably coupled to the tenth element, and wherein the eleventh element is or can be non-rotatably coupled to the input gear wheel (66) of the angle drive (62).

14. The vehicle (10) according to claim 13,
**characterised in that**
when viewed in the direction of the driveable second axle (20) and/or in the axial direction of the first rotor (34), the first electric motor (30), the first planetary wheel set (42), the second planetary wheel set (52), the input gear wheel (66) of the angle drive (62), the fourth planetary wheel set (98), the third planetary wheel set (96), and the further electric motor (86) are arranged in sequence in the following order: the first electric motor (30) - the first planetary wheel set (42) - the second planetary wheel set (52) - the input gear wheel (66) of the angle drive (62) - the fourth planetary wheel set (98) - the third planetary wheel set (96) - the further electric motor (86).

## Revendications

1. Véhicule à moteur (10), avec un premier essieu dirigeable (12), avec un second essieu pouvant être entraîné (20), avec un entraînement électrique (26) pour l'entraînement du second essieu (20), et avec une batterie de traction (28) au moyen de laquelle l'entraînement électrique (26) peut être alimenté en énergie électrique, accumulée dans la batterie de traction (28), dans lequel l'entraînement électrique (26) présente :
- un logement (28),
- un moteur électrique (30) qui présente un stator (32) et un rotor (34) pouvant tourner autour d'un axe de rotor (38) par rapport au stator (32) et par rapport au logement (28),
- un premier ensemble de roues planétaires (42) disposé de manière coaxiale à l'axe de rotor (38) qui présente un premier élément, un deuxième élément et un troisième élément,
- un deuxième ensemble de roues planétaires (52) disposé de manière coaxiale à l'axe de rotor (38) qui présente un quatrième élément, un cinquième élément et un sixième élément, dans lequel sont disposés successivement dans l'ordre suivant dans la direction axiale du rotor (34) du moteur électrique (30), du premier ensemble de roues planétaires (42) et du deuxième ensemble de roues planétaires (52) : le moteur électrique (30) - le premier ensemble de roues planétaires (42) - le deuxième ensemble de roues planétaires (52), et
- le logement (28) est connecté de manière rigide à un châssis (18) du véhicule à moteur (10),
- l'entraînement électrique (26) présente une commande par engrenage d'angle (62),
- le véhicule à moteur (10) présente un arbre de transmission (64),
- un des éléments du deuxième ensemble de roues planétaires (52) est couplé ou peut être couplé de manière fixe en rotation à une roue dentée d'entrée (66) de la commande par engrenage d'angle (62), et
- un côté de sortie (A) de l'arbre de transmission (64) est couplé ou peut être couplé à un engrenage d'essieu (70) du second essieu (20), **caractérisé en ce que** :
- l'axe de rotor (38) est disposé à angle droit par rapport à la direction longitudinale de véhicule (22),
- le premier essieu (12), la batterie de traction (28), le second essieu (20) et l'entraînement électrique (26) sont disposés successivement dans l'ordre suivant dans la direction longitudinale de véhicule (22) : le premier essieu (12) - la batterie de traction (28) - le second essieu (20) - l'entraînement électrique (26),
- une roue dentée de sortie (68) de la commande par engrenage d'angle (62) est couplée ou peut être couplée à un côté d'entrée (E) de l'arbre de transmission (64).

2. Véhicule à moteur (10) selon la revendication 1,
**caractérisé en ce que**
la roue dentée de sortie (68) de la commande par engrenage d'angle (62) est couplée de manière fixe en rotation à une première roue dentée (74) d'un étage de pignon droit (72).

3. Véhicule à moteur (10) selon la revendication 2,
une seconde roue dentée (76) de l'étage de pignon droit (72) est couplée de manière fixe en rotation au côté d'entrée (E) de l'arbre de transmission (64).

4. Véhicule à moteur (10) selon une des revendications précédentes,
**caractérisé en ce que**
l'entraînement électrique (26) présente :
- un premier élément de commutation (S1) au moyen duquel le troisième élément peut être couplé de manière fixe en rotation au rotor,
- un deuxième élément de commutation (S2) au moyen duquel le troisième élément peut être couplé de manière fixe en rotation au logement (28),
- un troisième élément de commutation (S3) au moyen duquel le premier élément peut être couplé de manière fixe en rotation au rotor (34),
- un quatrième élément de commutation (S4) au moyen duquel le premier élément peut être couplé de manière fixe en rotation au logement (28), dans lequel le quatrième élément de commutation (S4) est disposé sur un côté (S3) du moteur électrique (30) détourné du premier ensemble de roues planétaires (42) dans la direction axiale du rotor (34), et
- un cinquième élément de commutation (S5) au moyen duquel le deuxième élément peut être couplé de manière fixe en rotation au quatrième élément, dans lequel le cinquième élément est couplé ou peut être couplé de manière fixe en rotation à la roue dentée d'entrée (66) de la commande par engrenage d'angle (62).

5. Véhicule à moteur (10) selon la revendication 4,
**caractérisé en ce que**
le cinquième élément de commutation (S5) est réalisé pour coupler le deuxième élément de manière fixe en rotation au quatrième élément et de manière fixe en rotation au sixième élément.

6. Véhicule à moteur (10) selon la revendication 4 ou 5,
**caractérisé par**
un sixième élément de commutation (S6) au moyen duquel le sixième élément peut être couplé de manière fixe en rotation au logement (28).

7. Véhicule à moteur (10) selon une des revendications 4 à 6,
**caractérisé en ce que**
le troisième élément de commutation (S3) et le quatrième élément de commutation (S4) sont disposés de manière voisine axialement et réunis en un élément de commutation de couplage (KS) avec au moins deux positions de commutation.

8. Véhicule à moteur (10) selon une des revendications 4 à 7,
**caractérisé par**
un septième élément de commutation (S7) au moyen duquel le quatrième élément de commutation peut être couplé de manière fixe en rotation au logement (28).

9. Véhicule à moteur (10) selon la revendication 8,
**caractérisé en ce que**
le quatrième élément de commutation (S4), le moteur électrique (30), le premier ensemble de roues planétaires (42), le deuxième ensemble de roues planétaires (52), la roue dentée d'entrée (66) et le septième élément de commutation (S7) sont disposés successivement dans l'ordre suivant, vus dans la direction du second essieu pouvant être entraîné (20) et/ou dans la direction axiale du rotor (34) : le quatrième élément de commutation (S4) - le moteur électrique (30) - le premier ensemble de roues planétaires (42) - le deuxième ensemble de roues planétaires (52) - la roue dentée d'entrée (66) - le septième élément de commutation (S7).

10. Véhicule à moteur (10) selon une des revendications précédentes,
**caractérisé par**
un deuxième moteur électrique (77) disposé de manière coaxiale au moteur électrique (30) qui présente un deuxième stator (78) et un deuxième rotor (80) pouvant tourner par rapport au deuxième stator (78), dans lequel le deuxième rotor (80) est couplé ou peut être couplé de manière fixe en rotation à un des éléments du deuxième ensemble de roues planétaires (52).

11. Véhicule à moteur (10) selon la revendication 10,
**caractérisé en ce que**
le deuxième rotor (80) est couplé ou peut être couplé de manière fixe en rotation au quatrième élément.

12. Véhicule à moteur (10) selon la revendication 10 ou 11,
**caractérisé en ce que**
le premier moteur électrique (30), le premier ensemble de roues planétaires (42), le deuxième ensemble de roues planétaires (52), la roue dentée d'entrée (66) et le deuxième moteur électrique (77) sont disposés successivement dans l'ordre suivant, vus dans la direction du second essieu pouvant être entraîné (20) et/ou dans la direction axiale du premier moteur électrique (30) : le premier moteur électrique (30) - le premier ensemble de roues planétaires (42) - le deuxième ensemble de roues planétaires (52) - la roue dentée d'entrée (66) - le deuxième moteur électrique (77).

13. Véhicule à moteur (10) selon une des revendications 1 à 9,
**caractérisé par** :
- un autre moteur électrique (86) avec un autre stator (88) et un autre rotor (90) qui est disposé de manière coaxiale au premier rotor (34) et aux ensembles de roues planétaires (42, 52),
- un troisième ensemble de roues planétaires (96) avec un septième élément, un huitième élément et un neuvième élément qui sont disposés de manière coaxiale aux rotors (34, 90), au premier ensemble de roues planétaires (42) et au deuxième ensemble de roues planétaires (52), et
- un quatrième ensemble de roues planétaires (98) avec un dixième élément, un onzième élément et un douzième élément qui sont disposés de manière coaxiale aux rotors (34, 90), au premier ensemble de roues planétaires (42), au deuxième ensemble de roues planétaires (52) et au troisième ensemble de roues planétaires (96), dans lequel le deuxième rotor (90) est couplé ou peut être couplé de manière fixe en rotation au septième élément, dans lequel le huitième élément est couplé ou peut être couplé au dixième élément, et dans lequel le onzième élément est couplé ou peut être couplé de manière fixe en rotation à la roue dentée d'entrée (66) de la commande par engrenage d'angle (62).

14. Véhicule à moteur (10) selon la revendication 13,
**caractérisé en ce que**
le premier moteur électrique (30), le premier ensemble de roues planétaires (42), le deuxième ensemble de roues planétaires (52), la roue dentée d'entrée (66) de la commande par engrenage d'angle (62), le quatrième ensemble de roues planétaires (98), le troisième ensemble de roues planétaires (96) et l'autre moteur électrique (86) sont disposés successivement dans l'ordre suivant, vus dans la direction du second essieu pouvant être entraîné (20) et/ou dans la direction axiale du premier rotor (34) : le premier moteur électrique (30) - le premier ensemble de roues planétaires (42) - le deuxième ensemble de roues planétaires (52) - la roue dentée d'entrée (66) de la commande par engrenage d'angle (62) - le quatrième ensemble de roues planétaires (98) - le troisième ensemble de roues planétaires (96) - l'autre moteur électrique (86).
